(19) Europäisches Patentamt / European Patent Office / Office européen des brevets

(11) **EP 3 029 504 B1**

(12) **EUROPEAN PATENT SPECIFICATION**

(45) Date of publication and mention of the grant of the patent:
**19.02.2020   Bulletin 2020/08**

(51) Int Cl.:
***G02B 13/00*** *(2006.01)*   ***G02B 9/64*** *(2006.01)*

(21) Application number: **15195998.8**

(22) Date of filing: **24.11.2015**

(54) **IMAGING OPTICAL SYSTEM, IMAGING OPTICAL DEVICE, AND DIGITAL APPLIANCE**

OPTISCHES BILDGEBUNGSSYSTEM, OPTISCHE BILDGEBUNGSVORRICHTUNG UND DIGITALE VORRICHTUNG

SYSTÈME ET DISPOSITIF OPTIQUE D'IMAGERIE ET DISPOSITIF NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.12.2014   JP 2014244816**

(43) Date of publication of application:
**08.06.2016   Bulletin 2016/23**

(73) Proprietor: **Konica Minolta, Inc.**
**Tokyo 100-7015 (JP)**

(72) Inventor: **Yamada, Keiko**
**Tokyo 100-7015 (JP)**

(74) Representative: **Hoffmann Eitle**
**Patent- und Rechtsanwälte PartmbB**
**Arabellastraße 30**
**81925 München (DE)**

(56) References cited:
**JP-A- 2012 220 654      JP-A- 2012 242 472**
**US-A1- 2012 162 787      US-A1- 2012 257 100**
**US-A1- 2013 162 887**

**Description**

**BACKGROUND OF THE INVENTION**

1. Field of the Invention

The present invention relates to an imaging optical system, an imaging optical device, and a digital appliance. More particularly, the present invention relates to a compact, large-aperture normal lens of an inner focus design that is suitable for an interchangeable-lens digital camera which captures an image of a subject by use of an image sensor (e.g., a solid-state image sensor such as a CCD (charge-coupled device) image sensor or a CMOS (complementary metal-oxide semiconductor) image sensor), an imaging optical device that outputs in the form of an electrical signal the image of the subject captured by the image sensor through the normal lens, and a digital appliance furnished with an image input function, such as a digital cameral, that incorporates such an imaging optical device.

2. Description of Related Art

Today, mirrorless interchangeable-lens cameras having no swing-up mirror as is provided in single-lens reflex cameras are for their compactness widely accepted by users and are increasing their presence on the market. Some mirrorless interchangeable-lens cameras, however, are incompatible with phase-difference AF, which is the mainstream with conventional single-lens reflex cameras. Those cameras have no choice but adopt so-called contrast AF, in which a focusing lens group is swept across to find the position where the maximum contrast is obtained.
The problem now is the weight of the focusing group. In phase-difference AF, it is possible, based on information from an AF sensor, to calculate the distance across which to move the focusing group to achieve focus; thus, the focusing group can be moved according to the calculated distance. In contrast, in contrast AF, the sole information obtained from an AF sensor is the contrast value at the moment; to achieve focus, it is necessary, while moving the focusing group to read the contrast at one moment after another, to find the position where the maximum contrast is obtained. Accordingly, when the distance over which the focusing group has to be moved to achieve focus is compared between contrast AF and phase-difference AF, it is far larger in contrast AF.
From the perspective discussed above, in adapting an imaging optical system for contrast AF, it is significant to reduce the weight of the focusing group (see, e.g., Patent Document 1 identified below).

Patent Document 1: Japanese Patent Application Publication No. 2012-220654.
Patent Document 2: US 2013/162887 A1

Patent Document 1 proposes a construction comprising a first, positive, lens group, a second, negative lens group, and a third, positive, lens group wherein the second lens group is moved toward the object side for focusing. Here, for weight reduction of the second lens group, the second lens group is composed of a single lens element. However, this results in large variation of the beam incidence height and the beam incidence angle in the first lens group during focusing, causing large focusing-induced variation of spherical aberration.
Another example can be seen in Patent Document 2, which is considered the closest prior art. Other conventional imaging optical systems are disclosed in documents US 2012/162787, JP 2012 242472, US 2012/257100.

**SUMMARY OF THE INVENTION**

Against the background discussed above, an object of the present invention is to provide a compact, high-performance imaging optical system of an inner-focus design that has a weight-reduced focusing group despite having a large aperture and maintaining satisfactory performance and that has reduced focusing-induced variation in spherical aberration, and to provide an imaging optical device and a digital appliance incorporating such an imaging optical system.
According to one aspect of the present invention, an imaging optical system is defined in appended independent claim 1.
According to another aspect of the present invention, an imaging optical device is defined in appended claim 7.
According to yet another aspect of the present invention, a digital appliance is defined in appended claim 8.

**BRIEF DESCRIPTION OF THE DRAWINGS**

Fig. 1 is a lens construction diagram of a first embodiment (Example 1) of the present invention;

Fig. 2 is a lens construction diagram of a second embodiment (Example 2) of the present invention;
Fig. 3 is a lens construction diagram of a third embodiment (Example 3) of the present invention;
Fig. 4 is a lens construction diagram of a fourth embodiment (Example 4) of the present invention;
Fig. 5 is a lens construction diagram of a fifth embodiment (Example 5) of the present invention;
Fig. 6A to 6F are longitudinal aberration diagrams of Example 1;
Fig. 7A to 7F are longitudinal aberration diagrams of Example 2;
Fig. 8A to 8F are longitudinal aberration diagrams of Example 3;
Fig. 9A to 9F are longitudinal aberration diagrams of Example 4;
Fig. 10A to 10F are longitudinal aberration diagrams of Example 5;
Figs. 11A to 11J are lateral aberration diagrams, at the first focus position, of Example 1;
Figs. 12A to 12J are lateral aberration diagrams, at the second focus position, of Example 1;
Figs. 13A to 13J are lateral aberration diagrams, at the first focus position, of Example 2;
Figs. 14A to 14J are lateral aberration diagrams, at the second focus position, of Example 2;
Figs. 15A to 15J are lateral aberration diagrams, at the first focus position, of Example 3;
Figs. 16A to 16J are lateral aberration diagrams, at the second focus position, of Example 3;
Figs. 17A to 17J are lateral aberration diagrams, at the first focus position, of Example 4;
Figs. 18A to 18J are lateral aberration diagrams, at the second focus position, of Example 4;
Figs. 19A to 19J are lateral aberration diagrams, at the first focus position, of Example 5;
Figs. 20A to 20J are lateral aberration diagrams, at the second focus position, of Example 5; and
Fig. 21 is a schematic diagram showing an outline configuration example of a digital appliance incorporating an imaging optical system.

**DETAILED DESCRIPTION OF PREFERRED EMBODIMENTS**

Hereinafter, imaging optical systems, imaging optical devices, and digital appliances according to the present invention will be described. An imaging optical system according to the present invention is composed of, from the object side, a first, positive, lens group, a second, negative, lens group, and a third, positive, lens group, and is so constructed as to achieve focusing on a close object by moving the entire second lens group toward the image side along the optical axis. The first lens group is composed of, from the object side, a front group, an aperture stop, and a rear, positive, group. The most image-side lens surface in the front group is concave toward the aperture stop, and the most object-side lens surface in the rear group is concave toward the aperture stop. Moreover, conditional formulae (1) to (4) below are fulfilled:

$$-0.3 < FL / 1aGr\_Fl < 0.03 \tag{1}$$

$$0.85 < 1bGr\_Fl / FL < 1.1 \tag{2}$$

$$1.5 < |2Gr\_Fl / FL| < 2.5 \tag{3}$$

$$0.55 < |3Gr\_Fl / 2Gr\_Fl| < 0.70 \tag{4}$$

where

FL          represents the focal length of the entire system;
1aGr_Fl    represents the focal length of the front group;
1bGr_Fl    represents the focal length of the rear group;
2Gr_Fl     represents the focal length of the second lens group; and
3Gr_Fl     represents the focal length of the third lens group.

As distinct from an entire-system movable design, where focusing is achieved by moving out an entire imaging optical system, an inner-focus design, where, from the object side, a positive-negative-positive power arrangement is adopted (a power or an optical power being a quantity defined as the reciprocal of a focal length) and the second lens group having a negative optical power serves as a focusing group, allows a reduction in the total weight of the lens group that is moved for focusing. Moreover, adopting a construction where the light beam converged by the first lens group is first diverged by the second lens group and is then converged back by the third lens group allows adequate heights of incidence to be given to axial and off-axis beams in the second lens group as a focusing group. Thus, adopting the above-mentioned focusing design is effective in reducing focusing-induced variation of spherical aberration, variation of coma aberration, etc. which are particularly problematic in large-aperture lenses.

It is preferable that the subgroups in the first lens group, namely the front group and the rear group, be arranged such that their respective concave surfaces face each other across the aperture stop. Adopting this arrangement helps build an imaging optical system that has satisfactorily corrected coma aberration despite having a large aperture.

Conditional formulae (1) to (4) define conditions effective in reducing focusing-induced variation of axial aberration. Above the upper limit of conditional formula (1), focusing-induced variation of the angle of incidence of the axial beam entering the rear group is so large as to be disadvantageous to reducing variation of spherical aberration. Below the lower limit of conditional formula (1), the diverging effect of the front group on the off-axis beam is so great as to produce large coma aberration.

Above the upper limit of conditional formula (2), the optical power of the rear group is too low: an increased movement stroke of the second lens group during focusing results in large variation of the height of incidence of the axial beam with respect to the second lens group, causing large variation of spherical aberration during focusing. Below the lower limit of conditional formula (2), the optical power of the rear group is so high as to produce increased astigmatism ascribable to the rear group.

Above the upper limit of conditional formula (3), the optical power of the second lens group is too low: an increased movement stroke of the second lens group during focusing results in large variation of the height of incidence of the axial beam with respect to the second lens group, causing large variation of spherical aberration during focusing. Below the lower limit of conditional formula (3), the optical power of the second lens group is so high as to produce increased coma aberration in the off-axis beam resulting from the diverging effect of the second lens group.

Above the upper limit of conditional formula (4), the optical power of the third lens group is so low as to make it difficult to reduce coma aberration produced in the off-axis beam in the second lens group. Below the lower limit of conditional formula (4), the optical power of the third lens group is so high as to produce increased focusing-induced variation of curvature of field.

With the distinctive construction described above, an imaging optical system of an inner-focus design which has a first to a third lens group, respectively having a positive, a negative, and a positive optical power, arranged from the object side and which achieves focusing from infinity to a close distance by moving the second lens group toward the image side can be given a construction in which conditions effective in reducing the weight of the focusing group, reducing focusing-induced variation of spherical aberration, etc. are set properly. It is thus possible to build an imaging optical system and an imaging optical device that are compact and high-performance despite having a large aperture combined with satisfactory performance. For example, it is possible to build an imaging optical system which is a large-aperture normal lens with a compact total lens length combined with reduced focusing-induced variation of spherical aberration and which, owing to the reduced weight of the focusing group, can be more effectively adapted to contrast AF. By incorporating such a high-performance, high-functionality imaging optical system or imaging optical device in digital appliances (e.g., digital cameras), it is possible to furnish the digital appliances additionally with a high-performance image input function in a compact fashion.

By incorporating a high-performance, high-functionality imaging optical system or imaging optical device as described above in digital appliances such as digital cameras, it is possible to furnish the digital appliances additionally with a high-performance image input function in a light-weight, compact fashion. This contributes to producing compact, low-cost, high-performance, high-functionality, and otherwise improved digital appliances. Also, an imaging optical system according to the present invention is suitable as an interchangeable lens for mirrorless interchangeable-lens digital cameras, and with it, it is possible to build a light-weight, compact interchangeable lens that is convenient to carry around. Conditions and other features for obtaining the above-mentioned effects in a good balance, and for achieving higher optical performance, further weight/size reduction, etc. will be described below.

It is preferable that the second lens group include an aspherical-surface lens element, and that the aspherical-surface lens have, on its image-side surface, an aspherical surface shape having an increasingly high negative optical power the farther away from the optical axis. In general, focusing from infinity to a close distance causes spherical aberration to lean toward the under side. With an aspherical-surface lens having, on its image-side surface, an aspherical surface shape having an increasingly high negative optical power the farther away from the optical axis arranged in the second lens group, as the second lens group moves toward the image side, the axial beam diameter in the second lens group decreases; this diminishes the optical power of the aspherical surface to marginal rays, reducing variation of spherical aberration. In this way, it is possible to reduce variation of spherical aberration during focusing.

Moreover, conditional formula (5) below is fulfilled:

$$1.1 < 1aGr\_obj / 1aGr\_img < 1.5 \tag{5}$$

where

1aGr_obj    represents the axial beam effective radius at the most object-side surface in the front group; and
1aGr_img    represents the axial beam effective radius at the most image-side surface in the front group.

Conditional formula (5) defines the ratio of the axial beam radius at the entrance of the front group to that at the exit of the front group. Above the upper limit of conditional formula (5), the beam radius is reduced excessively in the front group; the height of incidence of the axial beam in the rear and subsequent groups is then so low as to be disadvantageous to correction of spherical aberration. Below the lower limit of conditional formula (5), the off-axis beam emerging from the front group diverges (meaning that the principal ray travels in a direction increasingly distant from the optical axis) to so small a degree as to be disadvantageous to correction of the coma aberration produced in the rear group.

It is preferable that the rear group include at least one aspherical-surface lens element. Providing an aspherical-surface lens element in the rear group allows effective correction of spherical aberration. Providing an aspherical surface on a surface convex to the object side allows more effective correction of spherical aberration. It is preferable that the aspherical surface convex to the object side be an aspherical surface having an increasingly low positive optical power the farther away from the optical axis (i.e., as the distance from the optical axis increases). Using an aspherical surface with such a shape helps reduce variation of the angle of incidence of marginal rays in the axial beam with respect to the aspherical surface between an infinity condition and a close condition, and thus helps reduce variation of focusing-induced variation of spherical aberration.

It is preferable that conditional formula (6) below be fulfilled:

$$2.5 < 3Gr\_F\_Rad / FL < 10 \tag{6}$$

where

3Gr_F_Rad    represents the radius of curvature of the surface located at the most object-side position in the third lens group; and
FL    represents the focal length of the entire system.

Conditional formula (6) defines the shape of the surface arranged at the most object-side position in the third lens group. Above the upper limit of conditional formula (6), the optical power of the surface is so low that it is not possible to satisfactorily correct coma aberration in the off-axis beam diverged by the second lens group. Below the lower limit of conditional formula (6), the optical power of the surface is so high as to result in increased spherical aberration.

It is preferable that the third lens group include two or more lens elements. Providing a plurality of lens elements in the third lens group helps obtain a construction effective in correcting coma aberration in the off-axis beam. Moreover, providing at least one positive lens element and at least one negative lens element and arranging the positive lens element to the object side of the negative lens element contributes to a greater aberration correction effect.

In an imaging optical system for forming an optical image of a subject on an imaging surface of an image sensor, assuming that one-half of the diagonal length of the screen size of the imaging surface equals the maximum value of the image height, then it is preferable that conditional formula (7) below be fulfilled:

$$40 < 2\omega < 50 \tag{7}$$

where

$\omega$    represents the maximum value (°) of the half angle of view.

Conditional formula (7) dictates the angle of view of an imaging optical system according to the present invention, and defines a conditional range preferable from the perspective of a good balance between weight reduction in the focusing group and reduction of variation in performance. Fulfilling conditional formula (7) results in fulfilling the angle of view of a so-called normal lens. In an imaging optical system within the range defined by conditional formula (7), fulfilling conditional formulae (1) to (4) above helps most effectively achieve weight reduction in the focusing group and improvement of focusing performance simultaneously.

An imaging optical system according to the present invention is suitable for use as an imaging lens in a digital appliance with an image input function (e.g., a digital camera); by combining one with an image sensor or the like, it is possible to build an imaging optical device that optically acquires an image of a subject and outputs it as an electrical signal. An imaging optical device is an optical device that constitutes a main component of a camera used for the shooting of still and moving images of a subject, and is composed of, for example, from the object side (i.e., from the subject side), an imaging optical system for forming an optical image of an object and an image sensor for converting the optical image formed by the imaging optical system into an electrical signal. By arranging an imaging optical system having the distinctive construction described previously such that an optical image of a subject is formed on a light-receiving surface (i.e., imaging surface) of the image sensor, it is possible to build a compact, low-cost, high-performance imaging optical device and a digital appliance incorporating it.

Examples of digital appliances with an image input function include cameras such as digital cameras, video cameras, surveillance cameras, security cameras, vehicle-mounted cameras, and videophone cameras. Further examples include personal computers, portable digital appliances (such as portable telephones, smartphones (high-functionality portable telephones), tablet terminals, mobile computers, etc.), peripheral devices for those (such as scanners, printers, mice, etc.), and other digital appliances (drive recorders, defense equipment, etc.) furnished with a camera function by incorporation or external fitting. As will be understood from these examples, not only can an imaging optical device be used to build a camera, but an imaging optical device can also be incorporated in various appliances to furnish them with a camera function. It is possible to build, for example, a digital appliance with an image input function, such as a camera-equipped portable telephone.

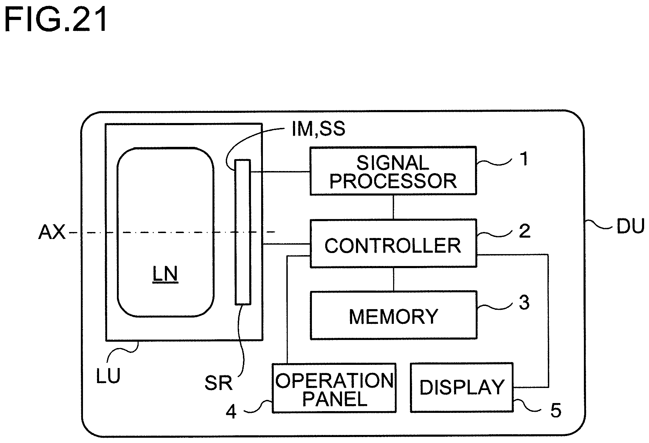

Fig. 21 shows an outline configuration example of a digital appliance DU as one example of a digital appliance with an image input function, in a schematic cross section thereof. An imaging optical device LU incorporated in the digital appliance DU shown in Fig. 21 includes, from the object side (i.e., the subject side), an imaging optical system LN for forming an optical image (image surface) IM of an object (with AX representing an optical axis) and an image sensor SR for converting the optical image IM formed on a light-receiving surface (imaging surface) SS by the imaging optical system LN into an electrical signal, and further includes, as necessary, a plane-parallel plate (corresponding to, e.g., a cover glass of the image sensor SR; and an optical filter such as an optical low-pass filter and an infrared cut filter arranged as necessary). When a digital appliance DU is built by use of an imaging optical device LU, typically the imaging optical device LU is arranged in the body of the digital appliance DU; to realize a camera function, various forms of implementation can be adopted as necessary. For example, an imaging optical device LU built as a unit can be configured to be removable from, or rotatable relative to, the body of a digital appliance DU.

The imaging optical system LN is a normal lens composed of three lens groups, namely a positive, a negative, and a positive lens group; it is so configured as to achieve focusing on an object at a close distance by moving the entire second lens group toward the image side along the optical axis AX, and to form an optical image IM on the light-receiving surface SS of an image sensor SR. Used as the image sensor SR is, for example, a solid-state image sensor such as a CCD (charge-coupled device) image sensor or a CMOS (complementary metal-oxide semiconductor) image sensor having a plurality of pixels. The imaging optical system LN is arranged such that an optical image IM of a subject is formed on the light-receiving surface SS, i.e., a photoelectric conversion portion, of the image sensor SR. Thus, the optical image IM formed by the imaging optical system LN is converted into an electrical signal by the image sensor SR.

The digital appliance DU includes, in addition to the imaging optical device LU, a signal processor 1, a controller 2, a memory 3, an operation panel 4, a display 5, etc. The signal generated by the image sensor SR is subjected to predetermined digital image processing, image compression processing, etc. in the signal processor 1 as necessary, and is then, as a digital image signal, recorded to the memory 3 (such as a semiconductor memory or an optical disc) or, as the case may be, transmitted to another device via a cable or after being converted into an infrared signal (e.g., a communication function of a portable telephone). The controller 2 includes a microcomputer, and comprehensively performs control of image taking functions (such as still-image and moving-image taking functions) and of image playback and other functions; and control of lens moving mechanisms for focusing, camera shake correction, etc. For example, the controller 2 controls the imaging optical device LU such that at least either the shooting of a still image of a subject or the shooting of a moving image of a subject is performed. The display 5 includes a display device such as a liquid crystal monitor, and displays an image based on an image signal resulting from the conversion by the image sensor SR or based on image information recorded in the memory 3. The operation panel 4 includes operation buttons (e.g., a release button), an operation dial (e.g., a shooting mode dial), etc., and conveys information entered by the operator to the controller 2.

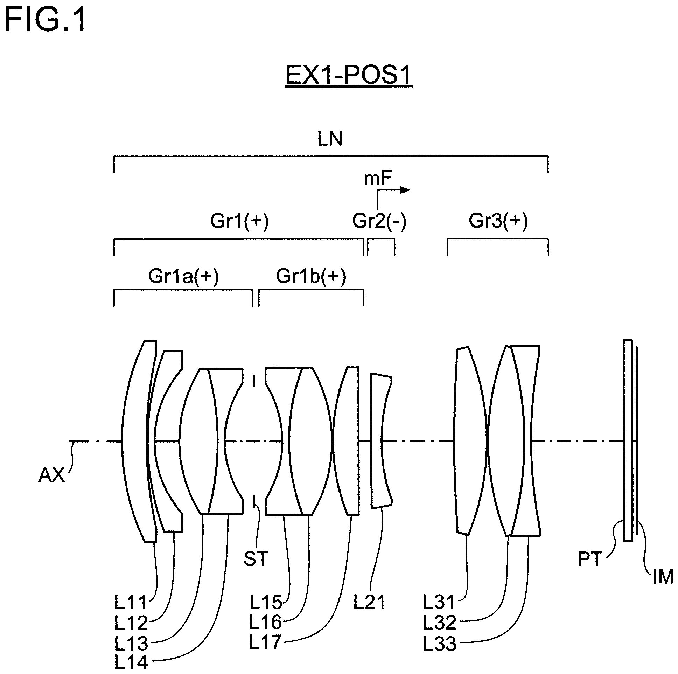

Next, the optical construction of the imaging optical system LN will be described in more detail by way of a first to a fifth embodiment thereof. Figs. 1 to 5 are lens construction diagrams corresponding to the imaging optical systems LN according to the first to fifth embodiments respectively, each showing the lens arrangement at a first focus position POS1 (in a subject-at-infinity condition), in an optical section. For focusing, the second lens group Gr2 moves along the optical axis AX. That is, the second lens group Gr2 is a focusing group, and for focusing on an object at a close distance, it moves toward the image side (i.e., toward the image sensor SR) as indicated by arrow mF.

The imaging optical systems LN according to the first to fifth embodiments are each a normal lens composed of three lens groups, namely a positive, a negative, and a positive lens group, wherein the second lens group serves as a focusing group. The first lens group Gr1 is composed of, from the object side, a front group Gr1a, an aperture stop ST, and a rear group Gr1b, and the front group Gr1a and the rear group Gr1b are arranged such that their respective concave surfaces face each other across the aperture stop ST. This arrangement, where the concave surfaces face each other across the aperture stop ST, helps satisfactorily correct coma aberration occurring in the front group Gr1a and the rear group Gr1b. Between the imaging optical system LN and the image surface IM, a plane-parallel plate PT is arranged, and the plane-parallel plate PT is a flat plate of glass that is equivalent to the total optical thickness of the cover glass of the image sensor SR and a low-pass filter for moiré prevention.

In the imaging optical system LN (Fig. 1) according to the first embodiment, the lens groups are each composed, from the object side, as follows. The front group Grla in the first lens group Gr1 is composed of a positive meniscus lens element L11 convex to the object side, a negative meniscus lens element L12 convex to the object side, and a cemented lens element made up of a biconvex lens element L13 and a biconcave lens element L14. The rear group Gr1b in the first lens group Gr1 is composed of a cemented lens element made up of a biconcave lens element L15 and a biconvex lens element L16, and a biconvex lens element L17 having aspherical surfaces on both sides. The most image-side lens element L14 in the front group Gr1a is concave to the image side, and the most object-side lens element L15 in the rear group Gr1b is concave to the object side.

The second lens group Gr2 is composed of a negative meniscus lens element L21 having aspherical surfaces on both sides and concave to the image side. Composing the second lens group Gr2 with a single aspherical-surface lens element helps simultaneously achieve weight reduction in the focusing group and reduction of aberrations during focusing. The third lens group Gr3 is composed of a biconvex lens element L31, and a cemented lens element made up of a biconvex lens element L32 and biconcave lens element L33. Arranging a biconvex lens element at the most object-side position in the third lens group Gr3 enables the off-axis beam diverged by the second lens group Gr2 to be converged properly, contributing to effective correction of coma aberration. On the other hand, arranging a cemented lens element in the third lens group Gr3 helps achieve effective reduction of variation of chromatic aberration during focusing.

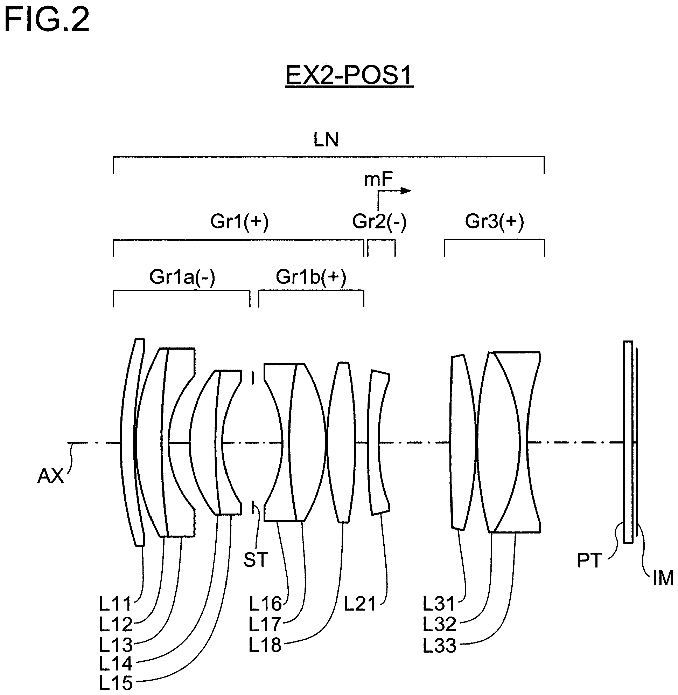

In the imaging optical system LN (Fig. 2) according to the second embodiment, the lens groups are each composed, from the object side, as follows. The front group Grla in the first lens group Gr1 is composed of a positive meniscus lens element L11 convex to the object side, a cemented lens element made up of a positive meniscus lens element L12 convex to the object side and a negative meniscus lens element L13 concave to the image side, a cemented lens element made up of a positive meniscus lens element L14 convex to the object side and a negative meniscus lens element L15 concave to the image side. The rear group Grlb in the first lens group Gr1 is composed of a cemented lens element made up of a biconcave lens element L16 and a biconvex lens element L17, and a biconvex lens element L18 having aspherical surfaces on both sides. The most image-side lens element L15 in the front group Gr1a is concave to the image side, and the most object-side lens element L16 in the rear group Gr1b is concave to the object side.

The second lens group Gr2 is composed of a negative meniscus lens element L21 having aspherical surfaces on both sides and concave to the image side. Composing the second lens group Gr2 with a single aspherical-surface lens element helps simultaneously achieve weight reduction in the focusing group and reduction of aberrations during focusing. The third lens group Gr3 is composed of a biconvex lens element L31, and a cemented lens element made up of a biconvex lens element L32 and a biconcave lens element L33. Arranging a biconvex lens element at the most object-side position in the third lens group Gr3 enables the off-axis beam diverged by the second lens group Gr2 to be converged properly, contributing to effective correction of coma aberration. On the other hand, arranging a cemented lens element in the third lens group Gr3 helps achieve effective reduction of variation of chromatic aberration during focusing.

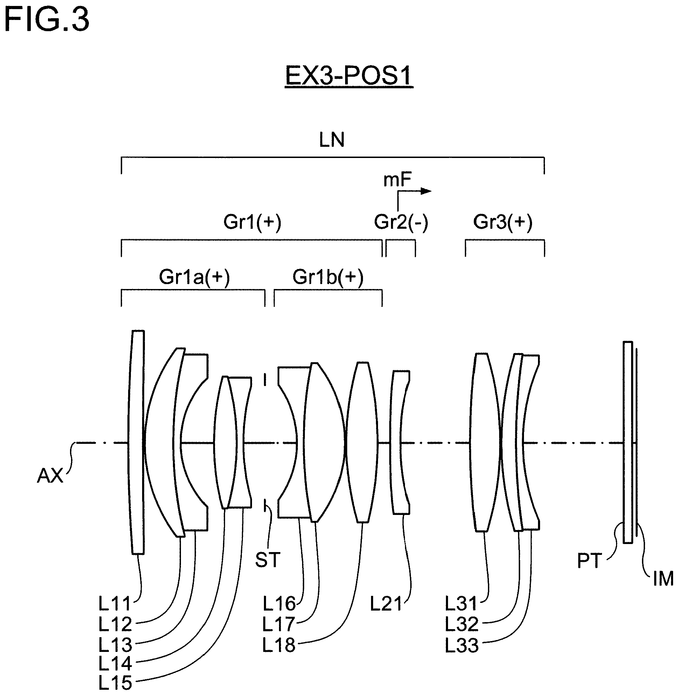

In the imaging optical system LN (Fig. 3) according to the third embodiment, the lens groups are each composed, from the object side, as follows. The front group Gr1a in the first lens group Gr1 is composed of a positive meniscus lens element L11 convex to the object side, a cemented lens element made up of a positive meniscus lens element L12 convex to the object side and a negative meniscus lens element L13 concave to the image side, and a cemented lens element made up of a biconvex lens element L14 and a biconcave lens element L15. The rear group Gr1b in the first lens group Gr1 is composed of a cemented lens element made up of a biconcave lens element L16 and a biconvex lens element L17, and a biconvex lens element L18 having aspherical surfaces on both sides. The most image-side lens element L15 in the front group Grla is concave to the image side, and the most object-side lens element L16 in the rear group Gr1b is concave to the object side.

The second lens group Gr2 is composed of a negative meniscus lens element L21 having aspherical surfaces on both sides and concave to the image side. Composing the second lens group Gr2 with a single aspherical-surface lens element helps simultaneously achieve weight reduction in the focusing group and reduction of aberrations during focusing. The third lens group Gr3 is composed of a biconvex lens element L31, and a cemented lens element made up of a positive meniscus lens element L32 convex to the object side and a negative meniscus lens element L33 concave to the image side. Arranging a biconvex lens element at the most object-side position in the third lens group Gr3 enables the off-axis beam diverged by the second lens group Gr2 to be converged properly, contributing to effective correction of coma aberration. On the other hand, arranging a cemented lens element in the third lens group Gr3 helps achieve effective reduction of variation of chromatic aberration during focusing.

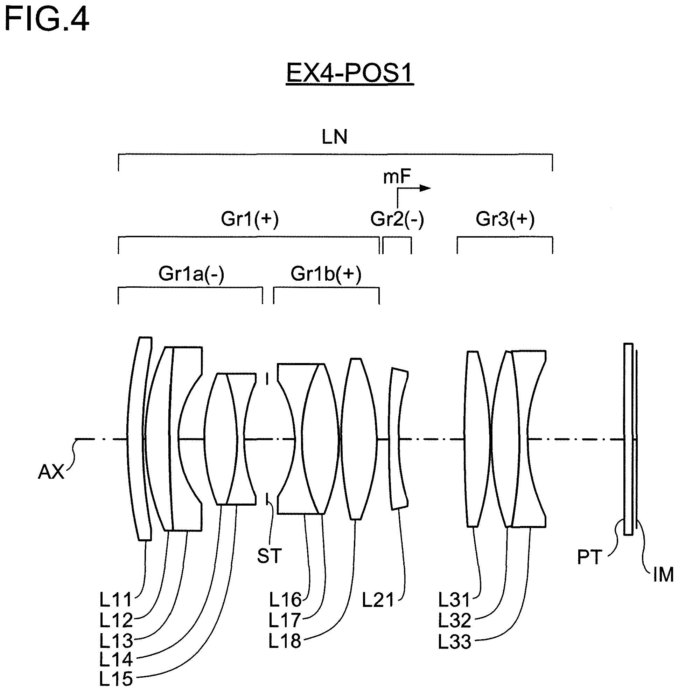

In the imaging optical system LN (Fig. 4) according to the fourth embodiment, the lens groups are each composed, from the object side, as follows. The front group Gr1a in the first lens group Gr1 is composed of a positive meniscus lens element L11 convex to the object side, a cemented lens element made up of a positive meniscus lens element L12 convex to the object side and a negative meniscus lens element L13 concave to the image side, and a cemented lens element made up of a biconvex lens element L14 and a biconcave lens element L15. The rear group Gr1b in the first lens group Gr1 is composed of a cemented lens element made up of a biconcave lens element L16 and a biconvex lens element L17, and a biconvex lens element L18 having aspherical surfaces on both sides. The most image-side lens element L15 in the front group Gr1a is concave to the image side, and the most object-side lens element L16 in the rear group Gr1b is concave to the object side.

The second lens group Gr2 is composed of a negative meniscus lens element L21 having aspherical surfaces on both sides and concave to the image side. Composing the second lens group Gr2 with a single aspherical-surface lens element helps simultaneously achieve weight reduction in the focusing group and reduction of aberrations during focusing. The third lens group Gr3 is composed of a biconvex lens element L31, and a cemented lens element made up of a biconvex lens element L32 and a biconcave lens element L33. Arranging a biconvex lens element at the most object-side position in the third lens group Gr3 enables the off-axis beam diverged by the second lens group Gr2 to be converged properly, contributing to effective correction of coma aberration. On the other hand, arranging a cemented lens element in the third lens group Gr3 helps achieve effective reduction of variation of chromatic aberration during focusing.

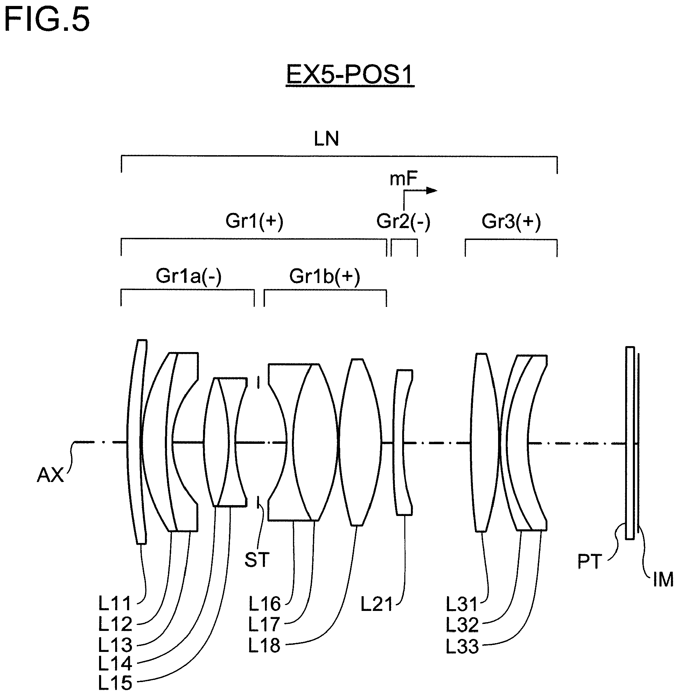

In the imaging optical system LN (Fig. 5) according to the fifth embodiment, the lens groups are each composed, from the object side, as follows. The front group Gr1a in the first lens group Gr1 is composed of a positive meniscus lens element L11 convex to the object side, a cemented lens element made up of a positive meniscus lens element L12 convex to the object side and a negative meniscus lens element L13 concave to the image side, and a cemented lens element made up of a biconvex lens element L14 and a biconcave lens element L15. The rear group Gr1b in the first lens group Gr1 is composed of a cemented lens element made up of a biconcave lens element L16 and a biconvex lens element L17, and a biconvex lens element L18 having aspherical surfaces on both sides. The most image-side lens element L15 in the front group Gr1a is concave to the image side, and the most object-side lens element L16 in the rear group Gr1b is concave to the object side.

The second lens group Gr2 is composed of a negative meniscus lens element L21 having aspherical surfaces on both sides and concave to the image side. Composing the second lens group Gr2 with a single aspherical-surface lens element helps simultaneously achieve weight reduction in the focusing group and reduction of aberrations during focusing. The third lens group Gr3 is composed of a biconvex lens element L31, and a cemented lens element made up of a negative meniscus lens element L32 concave to the image side and a positive meniscus lens element L33 convex to the object side. Arranging a biconvex lens element at the most object-side position in the third lens group Gr3 enables the off-axis beam diverged by the second lens group Gr2 to be converged properly, contributing to effective correction of coma aberration. On the other hand, arranging a cemented lens element in the third lens group Gr3 helps achieve effective reduction of variation of chromatic aberration during focusing.

Owing to the rear group Gr1b in the first lens group Gr1 including the biconvex lens element having aspherical surfaces on both sides, namely L17 (Fig. 1) or L18 (Figs. 2 to 5), it is possible to effectively correct spherical aberration. Moreover, the image-side surface of the lens element L21 (Figs. 1 to 5) having aspherical surfaces on both sides which constitutes the second lens group Gr2 has, on its image-side surface, an aspherical surface shape having an increasingly high negative optical power the farther away from the optical axis AX. Providing in the second lens group Gr2 a lens element having on its image-side surface an aspherical surface shape having an increasingly high negative optical power the farther away from the optical axis AX allows effective reduction of variation of spherical aberration during focusing.

Owing to the third lens group Gr3 being composed of a plurality of lens elements L31 to L33, it is possible to effectively correct coma aberration in the off-axis beam. In addition, there are provided at least one positive lens element and at least one negative lens element, and the positive lens element L31 is arranged at the most object-side position in the third lens group Gr3. This contributes to a greater aberration correction effect.

## EXAMPLES

Hereinafter, the construction and other features of imaging optical systems embodying the present invention will be described in further detail with reference to the construction and other data of practical examples. Examples 1 to 5 (EX 1 to EX 5) presented below are numerical examples corresponding respectively to the first to fifth embodiments described previously, and the lens construction diagrams (Figs. 1 to 5) showing the first to fifth embodiments also show the optical construction of the corresponding ones of Examples 1 to 5 respectively.

In the construction data of each practical example, listed as surface data are, from left to right, surface number i ("OB" denoting the object surface, "ST" the aperture surface, and "IM" the image surface), radius of curvature r (mm), axial distance d (mm), index of refraction nd for the d-line (with a wavelength of 587.56 nm), Abbe number vd for the d-line, and effective radius R (mm). A surface whose surface number i is marked with an asterisk ("*") is an aspherical surface, of which the surface shape is defined by formula (AS) below based on a local rectangular coordinate system (x, y, z) having an origin at the vertex of the surface. Listed as aspherical surface data are aspherical surface coefficients, etc. In the aspherical surface data of each practical example, any missing coefficient is assumed to be zero, and for all the data, "E-n" stands for "$\times 10^{-n}$".

$$z = (c \cdot h^2) / \{1 + \sqrt{[1 - (1 + K) \cdot c^2 \cdot h^2]}\} + \Sigma(Aj \cdot h^j) \qquad (AS)$$

where

h    represents the height in a direction perpendicular to the Z axis (optical axis AX) ($h^2 = x^2 + y^2$);

z    represents the sag in the optical axis AX direction (relative to the vertex of the surface) at the height h;

c    represents the curvature (the reciprocal of the radius of curvature r) at the vertex;

K    represents the conic constant; and

Aj    represents the aspherical surface coefficient of order j.

Listed as miscellaneous data are focal length of the entire system FL (mm), F-number (FNO), whole angle of view 2ω (°), total lens length TL (the distance from the foremost surface of the lens to the image surface IM; mm), and back focus bf (the distance from the image-side surface of the plane-parallel plate PT to the image surface IM; mm). Also listed, as variable parameters that vary with focusing, are variable axial distances di (i representing the surface number; mm) along with aperture radii (effective radii R) at the first and second focusing positions POS1 and POS2 respectively. Table 1 shows values corresponding to the conditional formulae in each practical example, along with related data.

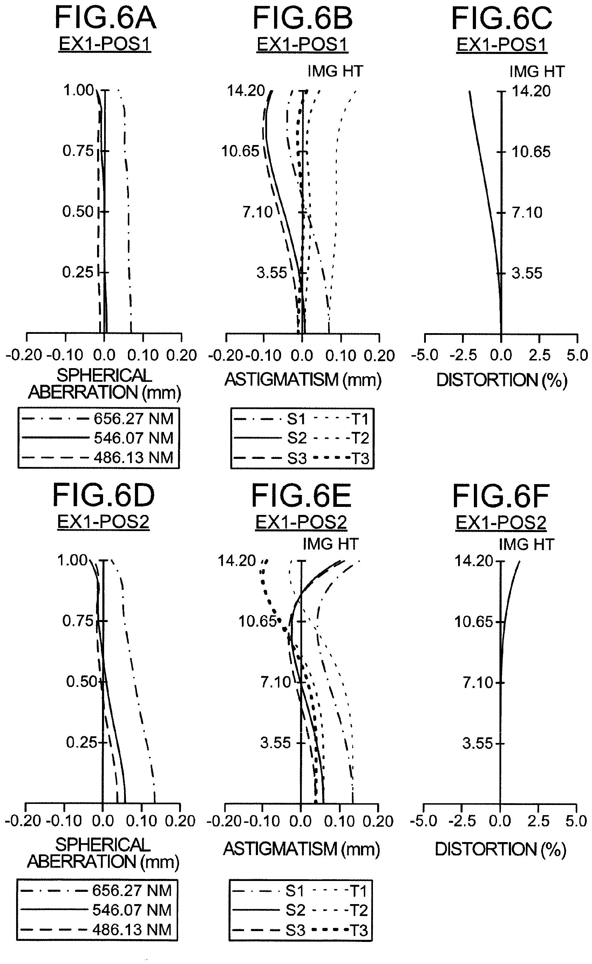

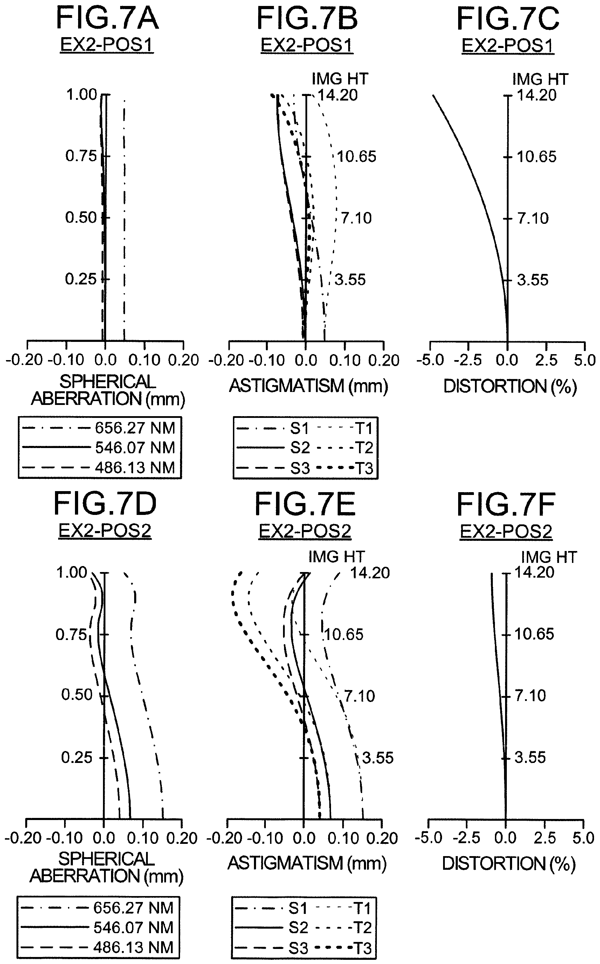

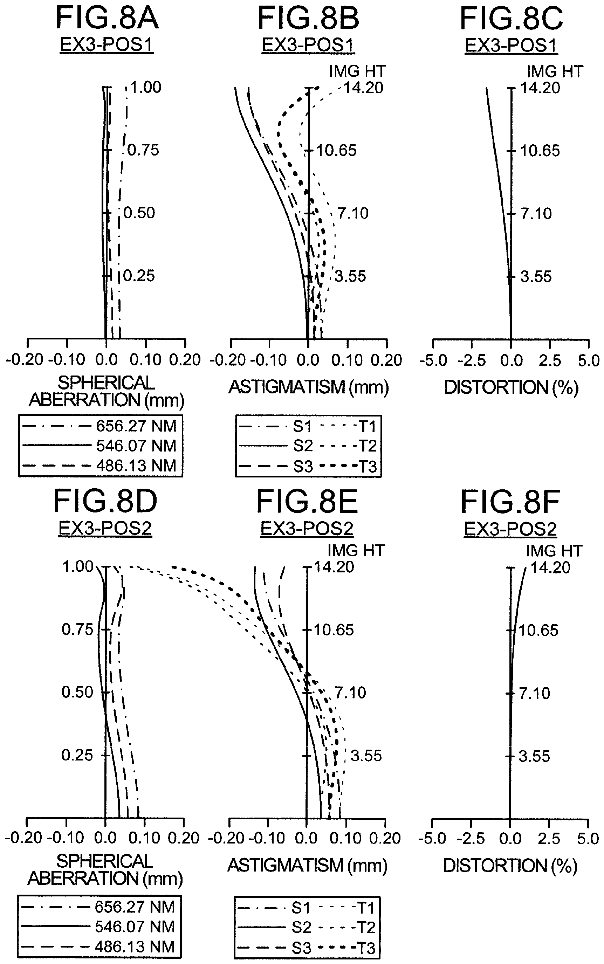

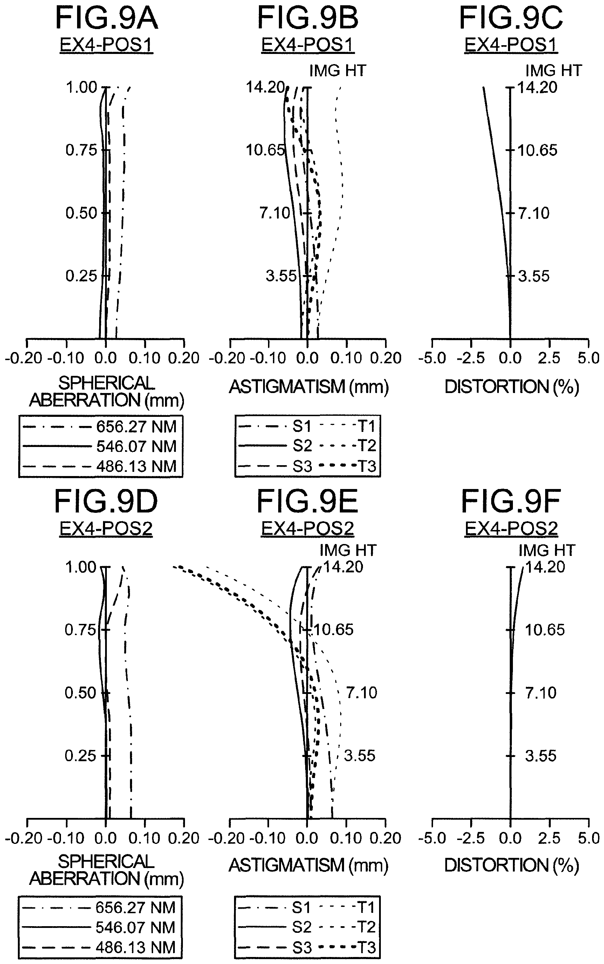

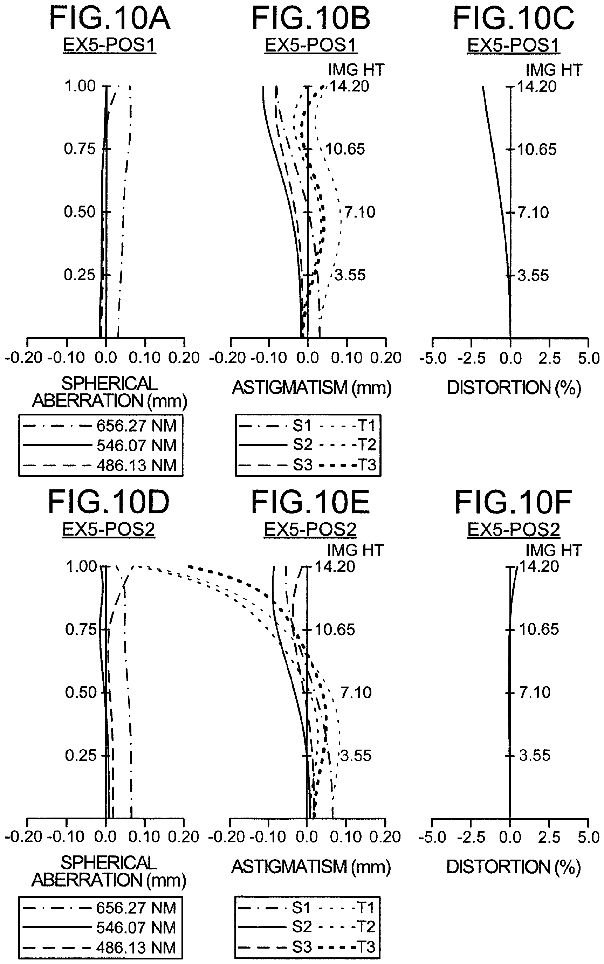

Figs. 6A-6F to 10A-10F are longitudinal aberration diagrams corresponding to the first to fifth embodiments (EX 1 to EX 5) respectively, Figs. 6A-6C to 10A-10C showing aberrations at the first focus position POS1, and Figs. 6D-6F to 10D-10F showing aberrations at the second focus position POS2. Of Figs. 6A-6F to 10A-10F, those suffixed with "A" and "D" are spherical aberration diagrams, those suffixed with "B" and "E" are astigmatism diagrams, and those suffixed with "C" and "F" are distortion diagrams.

In the spherical aberration diagrams, a dash-and-dot line indicates the amount of spherical aberration for the C-line (with a wavelength of 656.27 nm), a solid line indicates the amount of spherical aberration for the e-line (with a wavelength of 546.07 nm), and a broken line indicates the amount of spherical aberration for the F-line (with a wavelength of 486.13 nm), all in terms of a deviation (in mm) from the paraxial image surface in the optical axis AX direction, the vertical axis representing the height of incidence on the pupil as normalized with respect to the maximum height (i.e., the relative pupil height). In the astigmatism diagrams, lines T1, T2, and T3 indicate the tangential image surface for the C-, e-, and F-lines, and lines SI, S2, and S3 indicate the sagittal image surface for the C-, e-, and F-lines, all in terms of a deviation (mm) from the paraxial image surface in the optical axis AX direction, the vertical axis representing the image height (IMG HT, in mm). In the distortion diagrams, the horizontal axis represents distortion for the d-line (in %), and the vertical axis represents the image height (IMG HT, in mm). The maximum value of the image height IMG HT corresponds to the maximum image height Y' on the image surface IM (one-half of the diagonal length of the light-receiving surface SS of the image sensor SR).

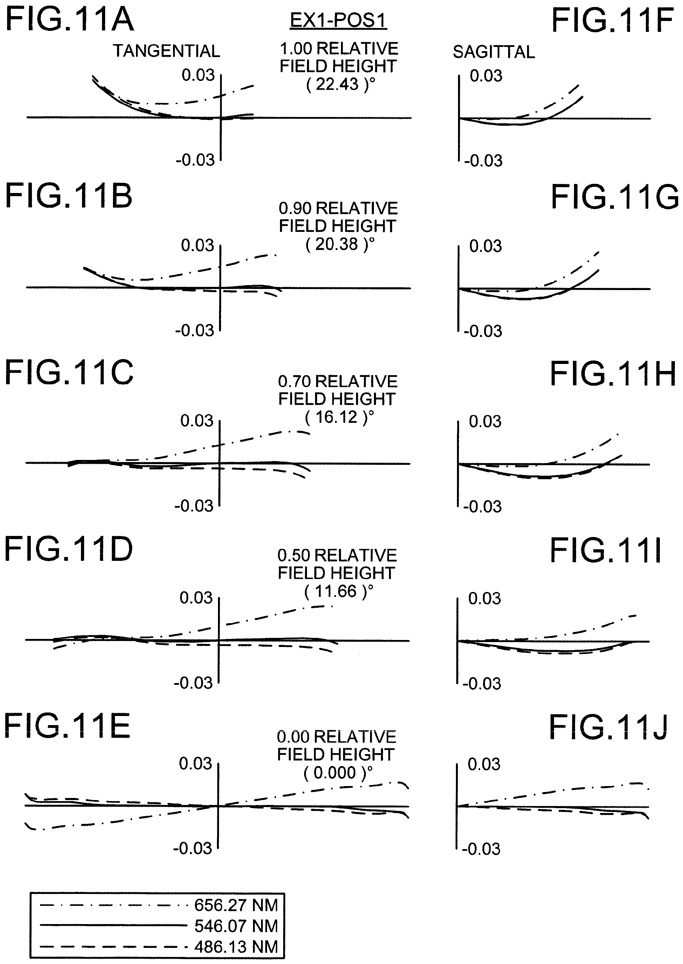

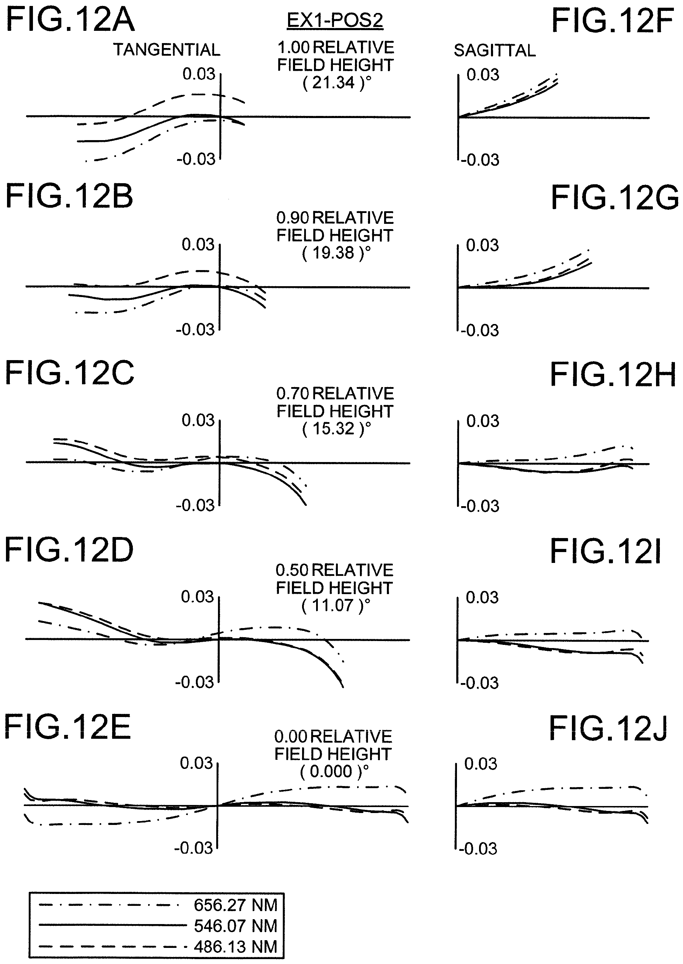

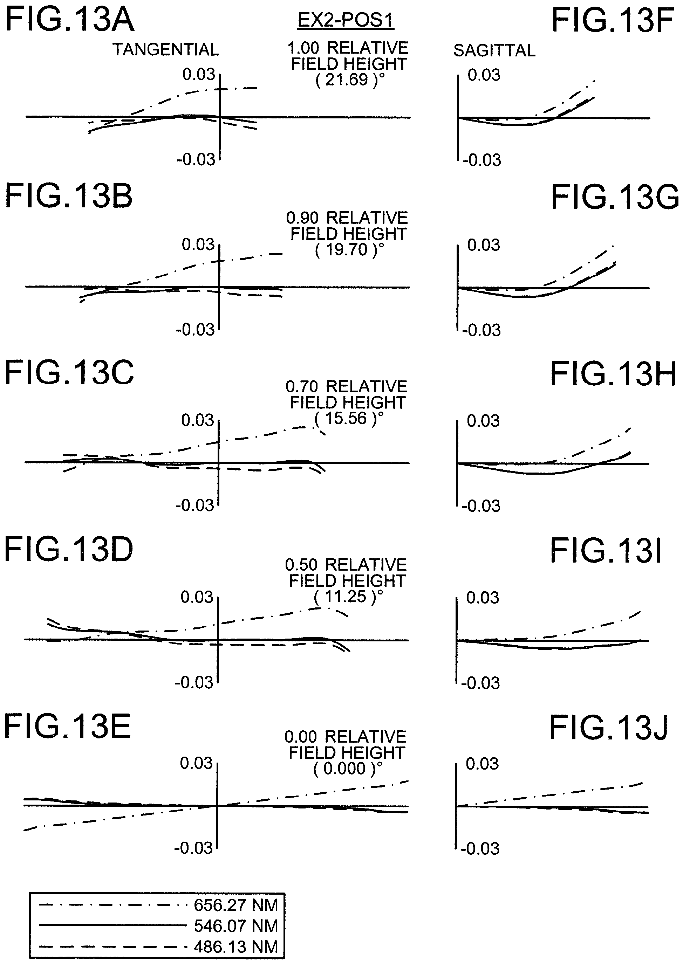

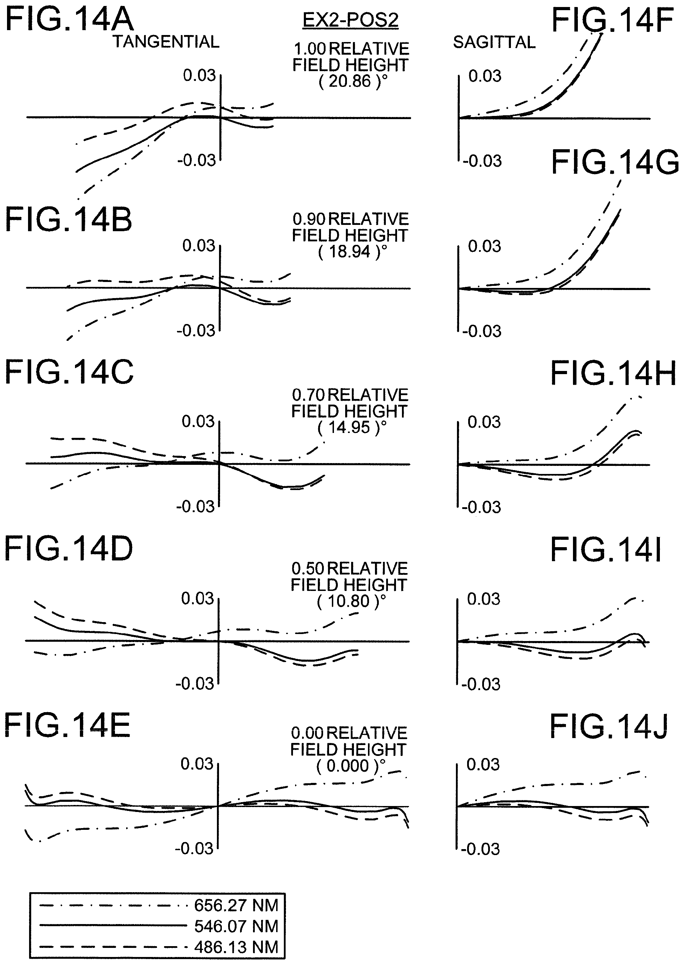

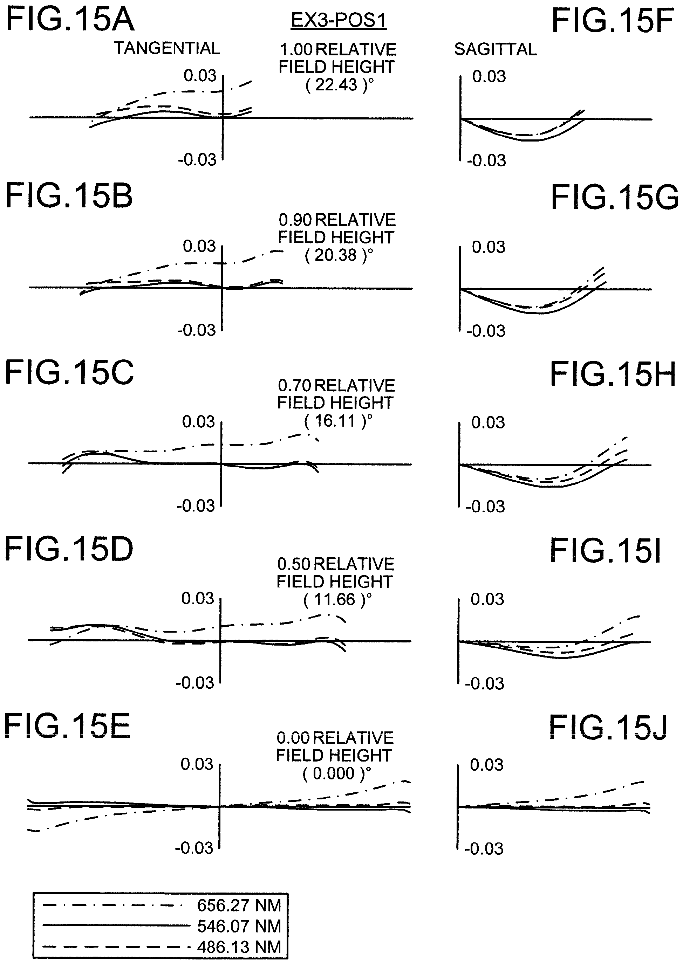

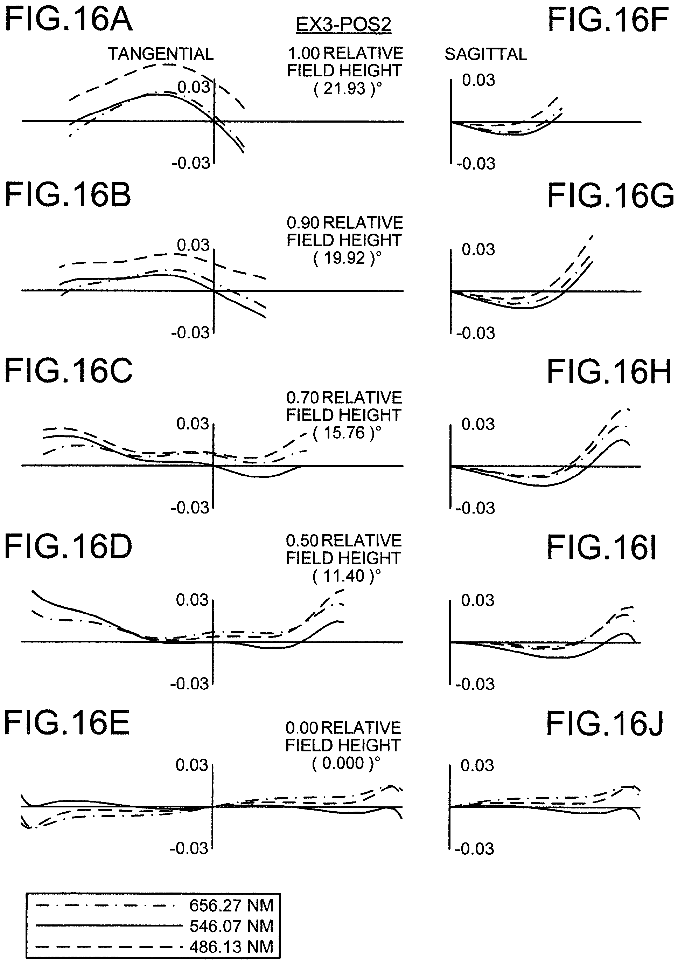

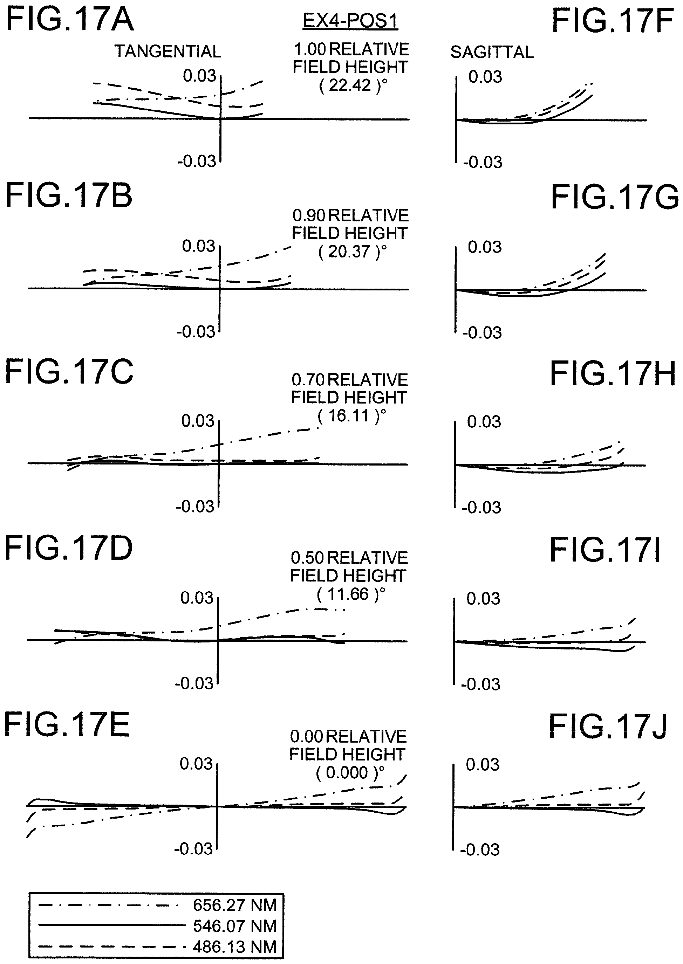

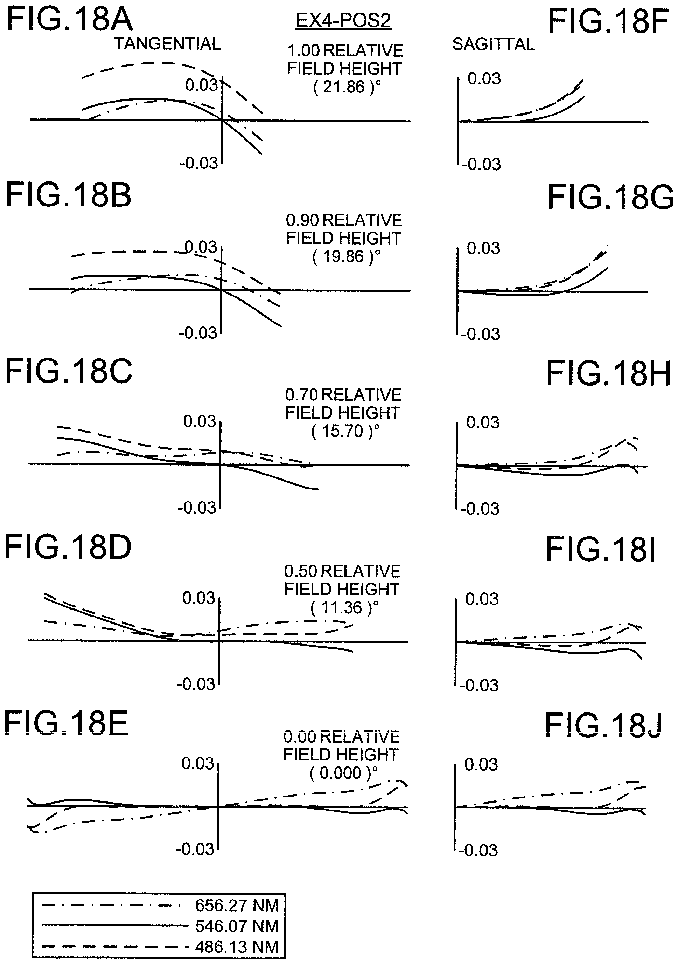

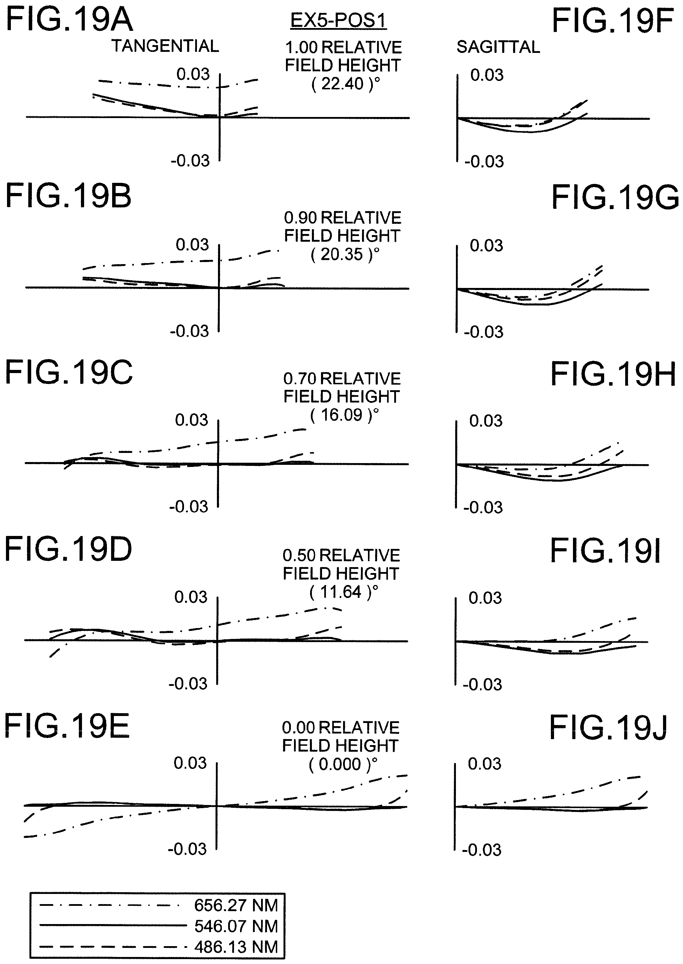

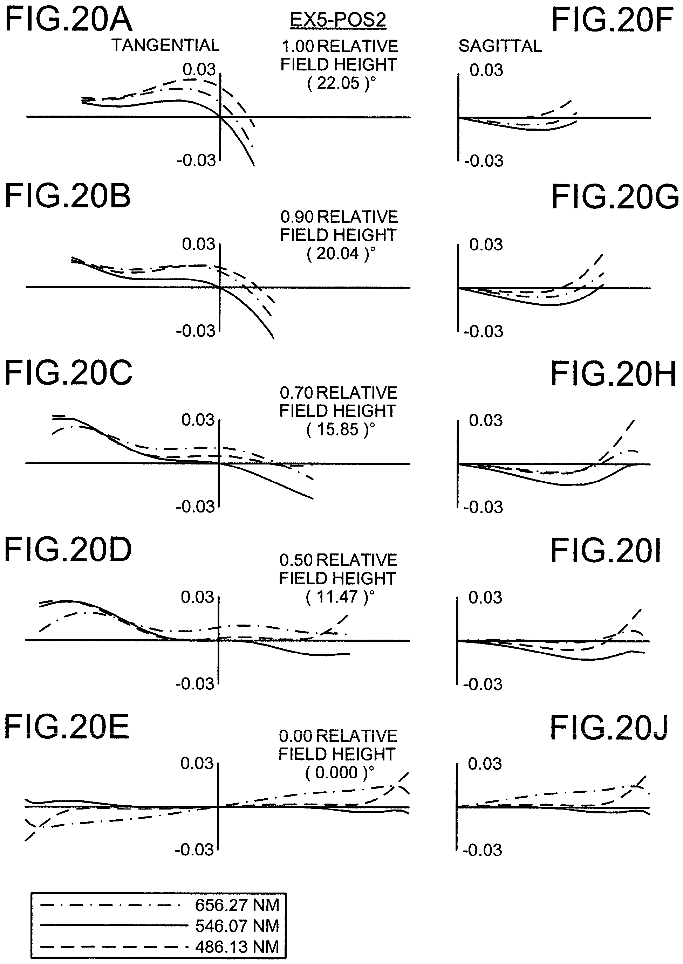

Figs. 11A-11J, Figs. 13A-13J, Figs. 15A-15J, Figs. 17A-17J, and Figs. 19A-19J are lateral aberration diagrams corresponding to the first to fifth embodiments (EX 1 to EX 5) respectively, each showing the lateral aberration (mm) at the first focus position POS1. Figs. 12A-12J, Figs. 14A-14J, Figs. 16A-16J, Figs. 18A-18J, and Figs. 20A-20J are lateral aberration diagrams corresponding to the first to fifth embodiments (EX 1 to EX 5) respectively, each showing the lateral aberration (mm) at the second focus position POS2.

Of Figs. 11A-11J to 20A-20J, those suffixed with "A" to "E" show lateral aberration in a tangential beam, and those suffixed with "F" to "J" show lateral aberration in a sagittal beam. In these diagrams, a dash-and-dot line, a solid line, and a broken like indicate the lateral aberration for the C-line (with a wavelength of 656.27 nm), the e-line (with a wavelength of 546.07 nm), and the F-line (with a wavelength of 486.13 nm), respectively, as observed at different image height ratios (half angles of view ω°) given as "RELATIVE FIELD HEIGHT". An image height ratio is a relative image height given by normalizing an image height with respect to the maximum image height Y'.

EXAMPLE 1

Unit:mm

|  |  | Surface Data |  |  |  |
|---|---|---|---|---|---|
| i | r | d | nd | vd | R |
| OB | ∞ | variable |  |  |  |
| 1 | 40.000 | 4.21 | 1.9332 | 19.88 | 16.012 |
| 2 | 67.555 | 0.20 |  |  | 14.935 |
| 3 | 43.158 | 1.20 | 1.4891 | 69.44 | 14.309 |
| 4 | 18.348 | 4.33 |  |  | 12.383 |
| 5 | 23.045 | 6.72 | 1.8394 | 41.72 | 11.400 |
| 6 | -45.139 | 1.20 | 1.6942 | 30.16 | 10.853 |
| 7 | 17.195 | 5.20 |  |  | 9.420 |
| 8(ST) | ∞ | 5.02 |  |  | 9.380 |
| 9 | -18.117 | 1.20 | 1.7617 | 26.53 | 9.431 |
| 10 | 34.972 | 7.54 | 1.8394 | 41.72 | 10.913 |
| 11 | -24.393 | 0.20 |  |  | 11.587 |
| 12* | 34.687 | 4.38 | 1.7468 | 48.29 | 11.600 |
| 13* | -787.424 | variable |  |  | 11.432 |
| 14* | 2000.000 | 1.80 | 1.5855 | 58.38 | 10.592 |
| 15* | 31.664 | variable |  |  | 10.000 |
| 16 | 229.439 | 5.64 | 1.8862 | 39.14 | 14.500 |
| 17 | -41.665 | 0.20 |  |  | 14.957 |
| 18 | 44.288 | 6.30 | 1.5949 | 67.62 | 15.089 |
| 19 | -57.525 | 1.20 | 1.6942 | 30.16 | 14.886 |
| 20 | 79.037 | 16.35 |  |  | 14.458 |
| 21 | ∞ | 1.50 | 1.5187 | 63.20 | 16.000 |
| 22 | ∞ | bf |  |  | 16.000 |
| IM | ∞ |  |  |  |  |

|  | Aspherical Surface Data |  |  |  |
|---|---|---|---|---|
| i | 12 | 13 | 14 | 15 |
| K | 0 | 0 | 0 | 0 |
| A4 | 4.144E-06 | 6.262E-06 | 6.262E-06 | 1.399E-05 |
| A6 | -3.815E-08 | -3.435E-08 | -4.324E-08 | -5.440E-08 |
| A8 | 3.534E-10 | 3.369E-10 | 8.167E-11 | 1.438E-10 |
| A10 | -1.524E-12 | -1.632E-12 | 0.000E+00 | -1.213E-13 |
| A12 | 0.000E+00 | 0.000E+00 | 0.000E+00 | 0.000E+00 |

|  | Miscellaneous Data |
|---|---|
| FL | 34.4 |
| FNO | 1.44 |
| 2ω | 44.9 |
| TL | 90.0 |
| bf | 0.8 |

(continued)

Variable Parameters

| Object | Distance | Aperture Radius | d13 | d15 |
|---|---|---|---|---|
| ∞ | (POS1) | 9.380 | 2.21 | 12.58 |
| 310mm | (POS2) | 9.380 | 9.30 | 5.49 |

EXAMPLE 2

Unit:mm

Surface Data

| i | r | d | nd | vd | R |
|---|---|---|---|---|---|
| OB | ∞ | variable | | | |
| 1 | 61.762 | 2.30 | 1.8393 | 36.34 | 16.419 |
| 2 | 74.401 | 0.30 | | | 15.814 |
| 3 | 34.025 | 4.34 | 1.9332 | 19.88 | 14.893 |
| 4 | 112.766 | 1.20 | 1.6169 | 35.96 | 14.047 |
| 5 | 16.720 | 3.67 | | | 11.400 |
| 6 | 19.298 | 4.48 | 1.8862 | 39.14 | 11.300 |
| 7 | 86.750 | 1.20 | 1.8550 | 22.78 | 10.885 |
| 8 | 18.180 | 5.38 | | | 9.933 |
| 9(ST) | ∞ | 5.28 | | | 10.090 |
| 10 | -19.779 | 1.20 | 1.7471 | 26.76 | 10.273 |
| 11 | 68.709 | 6.41 | 1.8395 | 41.72 | 11.765 |
| 12 | -25.550 | 0.20 | | | 12.357 |
| 13* | 43.066 | 4.88 | 1.7468 | 48.29 | 12.600 |
| 14* | -89.292 | variable | | | 12.581 |
| 15* | 2000.000 | 1.80 | 1.7468 | 48.29 | 11.362 |
| 16* | 45.721 | variable | | | 10.700 |
| 17 | 332.122 | 4.40 | 1.8862 | 39.14 | 13.500 |
| 18 | -53.553 | 0.21 | | | 13.903 |
| 19 | 59.098 | 7.45 | 1.8395 | 41.72 | 14.266 |
| 20 | -28.235 | 1.20 | 1.6942 | 30.16 | 14.146 |
| 21 | 44.081 | 17.06 | | | 13.295 |
| 22 | ∞ | 1.50 | 1.5187 | 63.20 | 16.000 |
| 23 | ∞ | bf | | | 16.000 |
| IM | ∞ | | | | |

Aspherical Surface Data

| i | 13 | 14 | 15 | 16 |
|---|---|---|---|---|
| K | 0 | 0 | 0 | 0 |
| A4 | -2.816E-06 | -1.098E-06 | 6.107E-05 | 7.154E-05 |
| A6 | -4.595E-08 | -4.810E-08 | -3.701E-07 | -3.608E-07 |
| A8 | 2.480E-10 | 2.984E-10 | 1.392E-09 | 1.281E-09 |
| A10 | -5.709E-13 | -7.353E-13 | -2.560E-12 | -2.337E-12 |
| A12 | 0.000E+00 | 0.000E+00 | 0.000E+00 | 0.000E+00 |

Miscellaneous Data

| | |
|---|---|
| FL | 35.7 |
| FNO | 1.44 |
| 2ω | 43.4 |
| TL | 90.0 |
| bf | 0.8 |

Variable Parameters

| Object | Distance | Aperture Radius | d14 | d16 |
|---|---|---|---|---|
| ∞ | (POS1) | 10.090 | 2.20 | 12.50 |
| 310mm | (POS2) | 10.090 | 9.30 | 5.40 |

EXAMPLE 3

Unit:mm

Surface Data

| i | r | d | nd | vd | R |
|---|---|---|---|---|---|
| OB | ∞ | variable | | | |
| 1 | 241.959 | 2.53 | 1.8348 | 42.72 | 17.815 |
| 2 | 1248.080 | 0.30 | | | 17.317 |
| 3 | 26.000 | 5.00 | 1.9229 | 20.88 | 14.958 |
| 4 | 64.197 | 1.30 | 1.6398 | 34.57 | 13.913 |
| 5 | 15.353 | 5.85 | | | 11.000 |
| 6 | 42.079 | 4.12 | 1.8348 | 42.72 | 10.300 |
| 7 | -38.661 | 1.22 | 1.7283 | 28.32 | 10.148 |
| 8 | 34.156 | 3.89 | | | 9.685 |
| 9(ST) | ∞ | 5.76 | | | 9.785 |
| 10 | -16.274 | 1.20 | 1.7618 | 26.61 | 9.907 |
| 11 | 66.794 | 7.27 | 1.8348 | 42.72 | 11.814 |
| 12 | -21.473 | 0.20 | | | 12.508 |
| 13* | 44.297 | 5.53 | 1.5920 | 67.02 | 12.600 |
| 14* | -54.968 | variable | | | 12.593 |
| 15* | 2000.000 | 1.80 | 1.7432 | 49.30 | 11.214 |
| 16* | 52.306 | variable | | | 10.600 |
| 17 | 115.534 | 5.30 | 1.8810 | 40.14 | 13.800 |
| 18 | -50.206 | 0.21 | | | 14.097 |
| 19 | 50.782 | 2.60 | 1.8348 | 42.72 | 14.003 |
| 20 | 99.828 | 1.20 | 1.6034 | 38.01 | 13.778 |
| 21 | 32.820 | 17.92 | | | 13.341 |
| 22 | ∞ | 1.50 | 1.5168 | 64.20 | 16.000 |
| 23 | ∞ | bf | | | 16.000 |
| IM | ∞ | | | | |

Aspherical Surface Data

| i | 13 | 14 | 15 | 16 |
|---|---|---|---|---|
| K | 0 | 0 | 0 | 0 |
| A4 | -1.138E-06 | 4.058E-06 | 5.283E-05 | 6.211E-05 |
| A6 | -5.541E-08 | -5.749E-08 | -3.030E-07 | -3.071E-07 |

(continued)

| i | 13 | 14 | 15 | 16 |
|---|---|---|---|---|
| A8 | 3.162E-10 | 3.583E-10 | 1.077E-09 | 1.087E-09 |
| A10 | -7.028E-13 | -8.698E-13 | -2.019E-12 | -2.224E-12 |
| A12 | 0.000E+00 | 0.000E+00 | 0.000E+00 | 0.000E+00 |

### Miscellaneous Data

| | |
|---|---|
| FL | 34.4 |
| FNO | 1.44 |
| $2\omega$ | 44.9 |
| TL | 90.0 |
| bf | 0.8 |

Variable Parameters

| Object | Distance | Aperture Radius | d14 | d16 |
|---|---|---|---|---|
| $\infty$ | (POS1) | 9.785 | 2.30 | 12.17 |
| | 310mm(POS2) | 9.785 | 9.38 | 5.08 |

EXAMPLE 4

Unit:mm

### Surface Data

| i | r | d | nd | vd | R |
|---|---|---|---|---|---|
| OB | $\infty$ | variable | | | |
| 1 | 77.925 | 2.78 | 1.8340 | 37.35 | 17.008 |
| 2 | 84.502 | 0.50 | | | 16.209 |
| 3 | 39.721 | 4.37 | 1.9229 | 20.88 | 15.326 |
| 4 | 197.430 | 1.60 | 1.5174 | 52.15 | 14.537 |
| 5 | 17.810 | 4.81 | | | 11.600 |
| 6 | 29.847 | 6.23 | 1.8348 | 42.72 | 10.800 |
| 7 | -34.044 | 1.30 | 1.7552 | 27.53 | 10.434 |
| 8 | 25.531 | 4.33 | | | 9.722 |
| 9(ST) | $\infty$ | 5.32 | | | 9.845 |
| 10 | -18.468 | 1.30 | 1.6889 | 31.16 | 9.969 |
| 11 | 29.908 | 6.89 | 1.7292 | 54.67 | 11.836 |
| 12 | -35.357 | 0.40 | | | 12.410 |
| 13* | 55.611 | 6.56 | 1.7432 | 49.30 | 13.200 |
| 14* | -33.421 | variable | | | 13.323 |
| 15* | 2000.000 | 1.80 | 1.7432 | 49.30 | 11.662 |
| 16* | 51.269 | variable | | | 11.100 |
| 17 | 204.370 | 4.84 | 1.8810 | 40.14 | 14.313 |
| 18 | -52.790 | 0.21 | | | 14.600 |
| 19 | 47.533 | 5.18 | 1.8348 | 42.72 | 14.682 |
| 20 | -88.488 | 1.50 | 1.6477 | 33.84 | 14.458 |
| 21 | 30.586 | 18.13 | | | 13.464 |
| 22 | $\infty$ | 1.50 | 1.5168 | 64.20 | 16.000 |
| 23 | $\infty$ | bf | | | 16.000 |
| IM | $\infty$ | | | | |

### Aspherical Surface Data

| i | 13 | 14 | 15 | 16 |
|---|---|---|---|---|
| K | 0 | 0 | 0 | 0 |
| A4 | -3.216E-06 | 6.802E-06 | 4.716E-05 | 5.477E-05 |
| A6 | -4.801E-09 | -8.283E-09 | -2.777E-07 | -2.745E-07 |
| A8 | 2.164E-11 | 3.717E-11 | 1.021E-09 | 9.612E-10 |
| A10 | 4.021E-14 | 8.350E-15 | -1.800E-12 | -1.649E-12 |
| A12 | 0.000E+00 | 0.000E+00 | 0.000E+00 | 0.000E+00 |

### Miscellaneous Data

| | |
|---|---|
| FL | 34.4 |
| FNO | 1.44 |
| $2\omega$ | 44.8 |
| TL | 94.8 |
| bf | 0.8 |

Variable Parameters

| Object | Distance | Aperture Radius | d14 | d16 |
|---|---|---|---|---|
| $\infty$ | (POS1) | 9.845 | 2.29 | 12.12 |
| 306mm | (POS2) | 9.845 | 9.39 | 5.02 |

EXAMPLE 5

Unit:mm

### Surface Data

| i | r | d | nd | vd | R |
|---|---|---|---|---|---|
| OB | $\infty$ | variable | | | |
| 1 | 90.324 | 2.39 | 1.8348 | 42.72 | 16.999 |
| 2 | 127.709 | 0.30 | | | 16.434 |
| 3 | 28.164 | 4.39 | 1.9229 | 20.88 | 14.798 |
| 4 | 61.142 | 1.20 | 1.5688 | 56.04 | 13.837 |
| 5 | 15.976 | 5.75 | | | 11.200 |
| 6 | 36.098 | 4.74 | 1.8348 | 42.72 | 10.500 |
| 7 | -32.530 | 1.20 | 1.7283 | 28.32 | 10.208 |
| 8 | 25.153 | 4.32 | | | 9.588 |
| 9(ST) | $\infty$ | 5.50 | | | 9.765 |
| 10 | -17.510 | 1.20 | 1.7174 | 29.50 | 9.940 |
| 11 | 30.009 | 8.34 | 1.7725 | 49.62 | 12.099 |
| 12 | -29.210 | 0.20 | | | 12.901 |
| 13* | 44.140 | 7.71 | 1.5831 | 59.39 | 13.700 |
| 14* | -30.986 | variable | | | 13.764 |
| 15* | 2000.000 | 1.80 | 1.7432 | 49.30 | 11.898 |
| 16* | 56.314 | variable | | | 11.300 |
| 17 | 124.457 | 5.25 | 1.8810 | 40.14 | 14.500 |
| 18 | -54.089 | 0.21 | | | 14.737 |
| 19 | 40.420 | 1.20 | 1.7174 | 29.50 | 14.497 |
| 20 | 27.778 | 3.92 | 1.8467 | 23.78 | 14.063 |
| 21 | 29.024 | 18.26 | | | 13.350 |

(continued)

| i | r | d | nd | vd | R |
|---|---|---|---|---|---|
| 22 | ∞ | 1.50 | 1.5168 | 64.20 | 16.000 |
| 23 | ∞ | bf | | | 16.000 |

Aspherical Surface Data

| i | 13 | 14 | 15 | 16 |
|---|---|---|---|---|
| K | 0 | 0 | 0 | 0 |
| A4 | -3.078E-06 | 9.831E-06 | 4.618E-05 | 5.318E-05 |
| A6 | -1.799E-08 | -2.078E-08 | -2.088E-07 | -2.020E-07 |
| A8 | 5.049E-11 | 6.605E-11 | 6.413E-10 | 6.392E-10 |
| A10 | -4.500E-14 | -6.913E-14 | -1.048E-12 | -1.181E-12 |
| A12 | 0.000E+00 | 0.000E+00 | 0.000E+00 | 0.000E+00 |

Miscellaneous Data

| | |
|---|---|
| FL | 34.5 |
| FNO | 1.44 |
| 2ω | 44.8 |
| TL | 95.0 |
| bf | 0.8 |

Variable Parameters

| Object | Distance | Aperture Radius | d14 | d16 |
|---|---|---|---|---|
| ∞ | (POS1) | 9.765 | 2.29 | 12.51 |
| 310mm | (POS2) | 9.765 | 9.39 | 5.39 |

Table 1

| Values of Conditional Formulae, Related Data | | EXAMPLE 1 | EXAMPLE 2 | EXAMPLE 3 | EXAMPLE 4 | EXAMPLE 5 |
|---|---|---|---|---|---|---|
| FL | | 34.40 | 35.70 | 34.40 | 34.40 | 34.45 |
| 1aGr_Fl | | 1697.35 | -419.04 | 42864.00 | -856.14 | -472.71 |
| 1bGr_Fl | | 35.73 | 32.65 | 33.22 | 33.49 | 32.17 |
| 1Gr_Fl | | 43.56 | 41.96 | 39.95 | 40.83 | 39.91 |
| 2Gr_Fl | | -54.56 | -62.68 | -71.95 | -70.49 | -77.62 |
| 3Gr_Fl | | 33.81 | 40.77 | 44.43 | 44.91 | 49.90 |
| 1aGr_obj | | 11.94 | 12.40 | 11.94 | 11.94 | 11.96 |
| 1aGr_img | | 9.33 | 9.91 | 9.66 | 9.72 | 9.59 |
| 3Gr_F_Rad | | 229.44 | 332.12 | 115.53 | 204.37 | 124.46 |
| ω | | 22.43 | 21.69 | 22.43 | 22.43 | 22.40 |
| (1) | FL/1aGr_Fl | 0.02 | -0.09 | 0.00 | -0.04 | -0.07 |
| (2) | 1bGr_Fl/FL | 1.04 | 0.91 | 0.97 | 0.97 | 0.93 |
| (3) | |2Gr_Fl/FL| | 1.59 | 1.76 | 2.09 | 2.05 | 2.25 |
| (4) | |3Gr_Fl/2Gr_Fl| | 0.62 | 0.65 | 0.62 | 0.64 | 0.64 |
| (5) | 1aGr_obj/1aGr_img | 1.28 | 1.25 | 1.24 | 1.23 | 1.25 |

(continued)

| Values of Conditional Formulae, Related Data | | EXAMPLE 1 | EXAMPLE 2 | EXAMPLE 3 | EXAMPLE 4 | EXAMPLE 5 |
|---|---|---|---|---|---|---|
| (6) | 3Gr_F_Rad/FL | 6.67 | 9.30 | 3.36 | 5.94 | 3.61 |
| (7) | 2ω | 44.86 | 43.38 | 44.86 | 44.86 | 44.80 |

**Claims**

1. An imaging optical system (LN) comprising, from an object side, a first lens group (Gr1) having a positive optical power, a second lens group (Gr2) having a negative optical power, and a third lens group (Gr3) having a positive optical power, the imaging optical system (LN) achieving focusing on a close object by moving the entire second lens group (Gr2) toward an image side along an optical axis, wherein
the first lens group (Gr1) comprises, from the object side, a front group (Gr1a), an aperture stop (ST), and a rear group (Gr1b) having a positive optical power,
a lens surface at a most image-side position in the front group (Gr1a) is concave toward the aperture stop (ST),
a lens surface at a most object-side position in the rear group (Gr1b) is concave toward the aperture stop (ST), and
**characterized in that** conditional formulae (1) to (4) below are fulfilled:

$$-0.3 < FL / 1aGr\_Fl < 0.03 \tag{1}$$

$$0.85 < 1bGr\_Fl / FL < 1.1 \tag{2}$$

$$1.5 < |2Gr\_Fl / FL| < 2.5 \tag{3}$$

$$0.55 < |3Gr\_Fl / 2Gr\_Fl| < 0.70 \tag{4}$$

where

FL represents a focal length of the entire system;
1aGr_Fl represents a focal length of the front group (Gr1a);
1bGr_Fl represents a focal length of the rear group (Gr1b);
2Gr_Fl represents a focal length of the second lens group (Gr2); and
3Gr_Fl represents a focal length of the third lens group (Gr3); and **in that** conditional formula (5) below is fulfilled:

$$1.1 < 1aGr\_obj / 1aGr\_img < 1.5 \tag{5}$$

where

1aGr_obj represents an axial beam effective radius at a most object-side surface in the front group (Gr1a); and
1aGr_img represents an axial beam effective radius at a most image-side surface in the front group (Gr1a).

2. The imaging optical system (LN) of claim 1, wherein
the second lens group (Gr2) includes an aspherical-surface lens element, and
the aspherical-surface lens element has, on an image-side surface thereof, an aspherical surface shape having an increasingly high negative power the farther away from the optical axis.

3. The imaging optical system (LN) of any one of claims 1 to 2, wherein the rear group (Gr1b) includes at least one aspherical-surface lens element.

4. The imaging optical system (LN) of any one of claims 1 to 3, wherein conditional formula (6) below is fulfilled:

$$2.5 < 3Gr\_F\_Rad / FL < 10 \qquad (6)$$

where

3Gr_F_Rad represents a radius of curvature of a surface located at a most object-side position in the third lens group (Gr3); and
FL represents the focal length of the entire system.

5. The imaging optical system (LN) of any one of claims 1 to 4, wherein the third lens group (Gr3) comprises two or more lens elements.

6. The imaging optical system (LN) of any one of claims 1 to 5, wherein
the imaging optical system (LN) serves to form an optical image of a subject on an imaging surface of an image sensor (SR), and
when one-half of a diagonal length of screen size of the imaging surface equals a maximum value of an image height, conditional formula (7) below is fulfilled:

$$40 < 2\omega < 50 \qquad (7)$$

where

$\omega$ represents a maximum value (°) of a half angle of view.

7. An imaging optical device (LU) comprising:

the imaging optical system (LN) of any one of claims 1 to 6; and
an image sensor (SR) for converting an optical image formed on an imaging surface thereof into an electrical signal, wherein
the imaging optical system (LN) is arranged such that an optical image of a subject is formed on the imaging surface of the image sensor (SR).

8. A digital appliance (DU) comprising the imaging optical device (LU) of claim 7 so as to be additionally provided with at least one of a function of shooting a still image of the subject and a function of shooting a moving image of the subject.

**Patentansprüche**

1. Optisches Bildgebungssystem (LN), umfassend, von einer Objektseite, eine erste Linsengruppe (Gr1), die eine positive optische Leistung aufweist, eine zweite Linsengruppe (Gr2), die eine negative optische Leistung aufweist, und eine dritte Linsengruppe (Gr3), die eine positive optische Leistung aufweist, wobei das optische Bildgebungssystem (LN) eine Fokussierung auf einem nahen Objekt erzielt, indem die gesamte zweite Linsengruppe (Gr2) entlang einer optischen Achse zu einer Bildseite bewegt wird, wobei
die erste Linsengruppe (Gr1), von der Objektseite, eine vordere Gruppe (Gr1a), einen Blendenstopp (ST) und eine hintere Gruppe (Gr1b), die eine positive optische Leistung aufweist, umfasst,
eine Linsenoberfläche an einer der Bildseite am nächsten liegenden Position in der vorderen Gruppe (Gr1a) zum Blendenstopp (ST) hin konkav ist,
eine Linsenoberfläche an einer der Objektseite am nächsten liegenden Position in der hinteren Gruppe (Gr1b) zum Blendenstopp (ST) hin konkav ist und
**dadurch gekennzeichnet, dass** folgende bedingte Formeln (1) bis (4) erfüllt sind:

$$-0,3 < FL/1aGr\_Fl < 0,03 \qquad (1)$$

$$0,85 < 1bGr\_Fl/FL < 1,1 \tag{2}$$

$$1,5 < |2Gr\_Fl/FL| < 2,5 \tag{3}$$

$$0,55 < |3Gr\_Fl/2Gr\_Fl| < 0,70 \tag{4}$$

wobei

FL eine Brennweite des gesamten Systems darstellt;
1aGr_Fl eine Brennweite der vorderen Gruppe (Gr1a) darstellt;
1bGr_Fl eine Brennweite der hinteren Gruppe (Gr1b) darstellt;
2Gr_Fl eine Brennweite der zweiten Linsengruppe (Gr2) darstellt; und
3Gr_Fl eine Brennweite der dritten Linsengruppe (Gr3) darstellt; und dass folgende bedingte Formel (5) erfüllt ist:

$$1,1 < 1aGr\_obj/1aGr\_img < 1,5 \tag{5}$$

wobei

1aGr_obj einen Axialstrahl-effektiven Radius an einer der Objektseite am nächsten liegenden Oberfläche in der vorderen Gruppe (Gr1a) darstellt; und
1aGr_img einen Axialstrahl-effektiven Radius an einer der Bildseite am nächsten liegenden Oberfläche in der vorderen Gruppe (Gr1a) darstellt.

2. Optisches Bildgebungssystem (LN) nach Anspruch 1, wobei
die zweite Linsengruppe (Gr2) ein Linsenelement mit asphärischer Oberfläche beinhaltet und das Linsenelement mit asphärischer Oberfläche an seiner Bildseitenoberfläche eine asphärische Oberflächenform mit einer zunehmend hohen negativen Leistung je weiter von der optischen Achse entfernt, aufweist.

3. Optisches Bildgebungssystem (LN) nach einem der Ansprüche 1 bis 2, wobei die hintere Gruppe (Gr1b) mindestens ein Linsenelement mit asphärischer Oberfläche beinhaltet.

4. Optisches Bildgebungssystem (LN) nach einem der Ansprüche 1 bis 3, wobei folgende bedingte Formel (6) erfüllt ist:

$$2,5 < 3Gr\_F\_Rad/FL < 10 \tag{6}$$

wobei

3Gr_F_Rad einen Krümmungsradius einer Oberfläche darstellt, die an einer der Objektseite am nächsten liegenden Position in der dritten Linsengruppe (Gr3) liegt; und
FL die Brennweite des gesamten Systems darstellt.

5. Optisches Bildgebungssystem (LN) nach einem der Ansprüche 1 bis 4, wobei die dritte Linsengruppe (Gr3) zwei oder mehr Linsenelemente umfasst.

6. Optisches Bildgebungssystem (LN) nach einem der Ansprüche 1 bis 5, wobei
das optische Bildgebungssystem (LN) dazu dient, ein optisches Bild eines Subjekts auf einer Bildgebungsoberfläche eines Bildsensors (SR) zu bilden, und
wenn eine Hälfte einer diagonalen Länge einer Schirmgröße der Bildgebungsoberfläche gleich einem Maximalwert einer Bildhöhe ist, folgende bedingte Formel (7) erfüllt ist:

$$40 < 2\omega < 50 \tag{7}$$

wobei

ω einen Maximalwert (°) eines halben Betrachtungswinkels darstellt.

7. Optische Bildgebungsvorrichtung (LU), umfassend:

das optische Bildgebungssystem (LN) nach einem der Ansprüche 1 bis 6; und
einen Bildsensor (SR) zum Umwandeln eines optischen Bildes, das auf einer seiner Bildgebungsoberfläche gebildet ist, in ein elektrisches Signal, wobei
das optische Bildgebungssystem (LN) so angeordnet ist, dass ein optisches Bild eines Subjekts auf der Bildgebungsoberfläche des Bildsensors (SR) gebildet ist.

8. Digitales Gerät (DU), umfassend die optische Bildgebungsvorrichtung (LU) nach Anspruch 7, um so zusätzlich mit zumindest einer Funktion zum Aufnehmen eines Standbildes des Subjekts und einer Funktion zum Aufnehmen eines Bewegtbildes des Subjekts bereitgestellt zu sein.

**Revendications**

1. Système optique d'imagerie (LN) comprenant, depuis un côté objet, un premier groupe de lentilles (Gr1) présentant une puissance optique positive, un deuxième groupe de lentilles (Gr2) présentant une puissance optique négative et un troisième groupe de lentilles (Gr3) présentant une puissance optique positive, le système optique d'imagerie (LN) assurant une focalisation sur un objet proche en déplaçant l'ensemble du second groupe de lentilles (Gr2) vers un côté image le long d'un axe optique, dans lequel
le premier groupe de lentilles (Gr1) comprend, depuis le côté objet, un groupe avant (Gr1a), un diaphragme d'ouverture (ST) et un groupe arrière (Gr1b) présentant une puissance optique positive,
une surface de lentille au niveau d'une position le plus côté image dans le groupe avant (Gr1a) est concave vers le diaphragme d'ouverture (ST),
une surface de lentille au niveau d'une position le plus côté objet dans le groupe arrière (Gr1b) est concave vers le diaphragme d'ouverture (ST), et
**caractérisé en ce que** les formules conditionnelles (1) à (4) ci-après sont respectées :

$$-0,3 < FL / 1aGr\_Fl < 0,03 \qquad (1)$$

$$0,85 < 1bGr\_Fl / FL < 1,1 \qquad (2)$$

$$1,5 < |2Gr\_Fl / FL| < 2,5 \qquad (3)$$

$$0,55 < |3Gr\_Fl / 2Gr\_Fl| < 0,70 \qquad (4)$$

où

FL représente une longueur focale de l'ensemble du système ;
1aGr_Fl représente une longueur focale du groupe avant (Gr1a) ;
1bGr_Fl représente une longueur focale du groupe arrière (Gr1b)
2Gr_Fl représente une longueur focale du second groupe de lentilles (Gr2) ; et
3Gr_Fl représente une longueur focale du troisième groupe de lentilles (Gr3) ; et
**en ce que** la formule conditionnelle (5) ci-après est respectée :

$$1,1 < 1aGr\_obj / 1aGr\_img < 1,5 \qquad (5)$$

où

1aGr_obj représente un rayon effectif de faisceau axial au niveau d'une surface le plus côté objet dans le groupe avant (Gr1a) ; et

1aGr_img représente un rayon effectif de faisceau axial au niveau d'une surface le plus côté image dans le groupe avant (Gr1a).

2. Système optique d'imagerie (LN) selon la revendication 1, dans lequel

le second groupe de lentilles (Gr2) inclut un élément formant lentille à surface asphérique, et

l'élément formant lentille à surface asphérique présente, sur une surface côté image de celui-ci, une forme de surface asphérique présentant une puissance négative de plus en plus élevée au fur et à mesure qu'il s'éloigne de l'axe optique.

3. Système optique d'imagerie (LN) selon l'une quelconque des revendications 1 à 2, dans lequel le groupe arrière (Gr1b) inclut au moins un élément formant lentille à surface asphérique.

4. Système optique d'imagerie (LN) selon l'une quelconque des revendications 1 à 3, dans lequel la formule conditionnelle (6) ci-après est respectée :

$$2,5 < 3Gr\_F\_Rad/FL < 10 \qquad (6)$$

où

3Gr_F_Rad représente un rayon de courbure d'une surface située au niveau d'une position le plus côté objet dans le troisième groupe de lentilles (Gr3) ; et

FL représente la longueur focale de l'ensemble du système.

5. Système optique d'imagerie (LN) selon l'une quelconque des revendications 1 à 4, dans lequel le troisième groupe de lentilles (Gr3) comprend deux éléments formant lentilles ou plus.

6. Système optique d'imagerie (LN) selon l'une quelconque des revendications 1 à 5, dans lequel

le système optique d'imagerie (LN) sert à former une image optique d'un sujet sur une surface d'imagerie d'un capteur d'image (SR), et

lorsqu'une moitié d'une longueur diagonale d'une taille d'écran de la surface d'imagerie est égale à une valeur maximale d'une hauteur d'image, la formule conditionnelle (7) ci-après est respectée :

$$40 < 2\omega < 50 \qquad (7)$$

où

ω représente une valeur maximale (°) d'un demi-angle de vue.

7. Dispositif optique d'imagerie (LU) comprenant :

le système optique d'imagerie (LN) selon l'une quelconque des revendications 1 à 6 ; et

un capteur d'image (SR) pour convertir une image optique formée sur une surface d'imagerie de celui-ci en un signal électrique, dans lequel

le système optique d'imagerie (LN) est conçu de sorte qu'une image optique d'un sujet est formée sur la surface d'imagerie du capteur d'image (SR).

8. Appareil numérique (DU) comprenant le dispositif optique d'imagerie (LU) selon la revendication 7 de façon à être pourvu en outre d'au moins une parmi une fonction de prise d'une image fixe du sujet et une fonction de prise d'une image mobile du sujet.

# FIG.1

## EX1-POS1

# FIG.2

## EX2-POS1

# FIG.3

## EX3-POS1

# FIG.4

## EX4-POS1

# FIG.5

## EX5-POS1

# FIG.6A
## EX1-POS1

SPHERICAL
ABERRATION (mm)

| — · — · — 656.27 NM |
| ———— 546.07 NM |
| — — — 486.13 NM |

# FIG.6B
## EX1-POS1

IMG HT

ASTIGMATISM (mm)

| — · — S1  · · · ·T1 |
| ——— S2  · · · ·T2 |
| — — — S3  · · · ·T3 |

# FIG.6C
## EX1-POS1

IMG HT

DISTORTION (%)

# FIG.6D
## EX1-POS2

SPHERICAL
ABERRATION (mm)

| — · — · — 656.27 NM |
| ———— 546.07 NM |
| — — — 486.13 NM |

# FIG.6E
## EX1-POS2

IMG HT

ASTIGMATISM (mm)

| — · — S1  · · · ·T1 |
| ——— S2  · · · ·T2 |
| — — — S3  · · · ·T3 |

# FIG.6F
## EX1-POS2

IMG HT

DISTORTION (%)

26

FIG.7A
EX2-POS1

FIG.7B
EX2-POS1

FIG.7C
EX2-POS1

FIG.7D
EX2-POS2

FIG.7E
EX2-POS2

FIG.7F
EX2-POS2

## FIG.8A
EX3-POS1

SPHERICAL ABERRATION (mm)

656.27 NM
546.07 NM
486.13 NM

## FIG.8B
EX3-POS1

IMG HT

ASTIGMATISM (mm)

S1 · · · · T1
S2 · · · · T2
S3 · · · · T3

## FIG.8C
EX3-POS1

IMG HT

DISTORTION (%)

## FIG.8D
EX3-POS2

SPHERICAL ABERRATION (mm)

656.27 NM
546.07 NM
486.13 NM

## FIG.8E
EX3-POS2

IMG HT

ASTIGMATISM (mm)

S1 · · · · T1
S2 · · · · T2
S3 · · · · T3

## FIG.8F
EX3-POS2

IMG HT

DISTORTION (%)

# FIG.9A
## EX4-POS1

1.00

0.75

0.50

0.25

-0.20 -0.10 0.0 0.10 0.20

SPHERICAL
ABERRATION (mm)

- · — · — 656.27 NM
- —— 546.07 NM
- — — — 486.13 NM

# FIG.9B
## EX4-POS1

IMG HT

14.20

10.65

7.10

3.55

-0.20 -0.10 0.0 0.10 0.20

ASTIGMATISM (mm)

- — · — S1 · · · · T1
- —— S2 · · · · T2
- — — — S3 · · · · T3

# FIG.9C
## EX4-POS1

IMG HT

14.20

10.65

7.10

3.55

-5.0 -2.5 0.0 2.5 5.0

DISTORTION (%)

# FIG.9D
## EX4-POS2

1.00

0.75

0.50

0.25

-0.20 -0.10 0.0 0.10 0.20

SPHERICAL
ABERRATION (mm)

- — · — 656.27 NM
- —— 546.07 NM
- — — — 486.13 NM

# FIG.9E
## EX4-POS2

IMG HT

14.20

10.65

7.10

3.55

-0.20 -0.10 0.0 0.10 0.20

ASTIGMATISM (mm)

- — · — S1 · · · · T1
- —— S2 · · · · T2
- — — — S3 · · · · T3

# FIG.9F
## EX4-POS2

IMG HT

14.20

10.65

7.10

3.55

-5.0 -2.5 0.0 2.5 5.0

DISTORTION (%)

29

# FIG.10A
## EX5-POS1

SPHERICAL
ABERRATION (mm)

| | 656.27 NM |
|---|---|
| | 546.07 NM |
| | 486.13 NM |

# FIG.10B
## EX5-POS1

IMG HT

ASTIGMATISM (mm)

| | S1 | | T1 |
|---|---|---|---|
| | S2 | | T2 |
| | S3 | | T3 |

# FIG.10C
## EX5-POS1

IMG HT

DISTORTION (%)

# FIG.10D
## EX5-POS2

SPHERICAL
ABERRATION (mm)

| | 656.27 NM |
|---|---|
| | 546.07 NM |
| | 486.13 NM |

# FIG.10E
## EX5-POS2

IMG HT

ASTIGMATISM (mm)

| | S1 | | T1 |
|---|---|---|---|
| | S2 | | T2 |
| | S3 | | T3 |

# FIG.10F
## EX5-POS2

IMG HT

DISTORTION (%)

# FIG.11A

EX1-POS1

TANGENTIAL

1.00 RELATIVE FIELD HEIGHT ( 22.43 )°

0.03

-0.03

# FIG.11F

SAGITTAL

0.03

-0.03

# FIG.11B

0.90 RELATIVE FIELD HEIGHT ( 20.38 )°

0.03

-0.03

# FIG.11G

0.03

-0.03

# FIG.11C

0.70 RELATIVE FIELD HEIGHT ( 16.12 )°

0.03

-0.03

# FIG.11H

0.03

-0.03

# FIG.11D

0.50 RELATIVE FIELD HEIGHT ( 11.66 )°

0.03

-0.03

# FIG.11I

0.03

-0.03

# FIG.11E

0.00 RELATIVE FIELD HEIGHT ( 0.000 )°

0.03

-0.03

# FIG.11J

0.03

-0.03

— · — · — · — · 656.27 NM
———————— 546.07 NM
— — — — — · 486.13 NM

31

# FIG.12A

EX1-POS2

# FIG.12F

TANGENTIAL

1.00 RELATIVE
FIELD HEIGHT
( 21.34 )°

SAGITTAL

# FIG.12B

0.90 RELATIVE
FIELD HEIGHT
( 19.38 )°

# FIG.12G

# FIG.12C

0.70 RELATIVE
FIELD HEIGHT
( 15.32 )°

# FIG.12H

# FIG.12D

0.50 RELATIVE
FIELD HEIGHT
( 11.07 )°

# FIG.12I

# FIG.12E

0.00 RELATIVE
FIELD HEIGHT
( 0.000 )°

# FIG.12J

— · — · — · — · — ·  656.27 NM
——————————  546.07 NM
— — — — — — ·  486.13 NM

32

# FIG.13A

TANGENTIAL

1.00 RELATIVE FIELD HEIGHT ( 21.69 )°

0.03

-0.03

# FIG.13F

SAGITTAL

0.03

-0.03

# FIG.13B

0.90 RELATIVE FIELD HEIGHT ( 19.70 )°

0.03

-0.03

# FIG.13G

0.03

-0.03

# FIG.13C

0.70 RELATIVE FIELD HEIGHT ( 15.56 )°

0.03

-0.03

# FIG.13H

0.03

-0.03

# FIG.13D

0.50 RELATIVE FIELD HEIGHT ( 11.25 )°

0.03

-0.03

# FIG.13I

0.03

-0.03

# FIG.13E

0.00 RELATIVE FIELD HEIGHT ( 0.000 )°

0.03

-0.03

# FIG.13J

0.03

-0.03

| | |
|---|---|
| — · — · — · — · — | 656.27 NM |
| ————————— | 546.07 NM |
| — — — — — — | 486.13 NM |

FIG.14A

TANGENTIAL

EX2-POS2

1.00 RELATIVE FIELD HEIGHT ( 20.86 )°

SAGITTAL

FIG.14F

FIG.14B

0.90 RELATIVE FIELD HEIGHT ( 18.94 )°

FIG.14G

FIG.14C

0.70 RELATIVE FIELD HEIGHT ( 14.95 )°

FIG.14H

FIG.14D

0.50 RELATIVE FIELD HEIGHT ( 10.80 )°

FIG.14I

FIG.14E

0.00 RELATIVE FIELD HEIGHT ( 0.000 )°

FIG.14J

— · — · — · — · 656.27 NM
——————— 546.07 NM
— — — — — · 486.13 NM

# FIG.15A

EX3-POS1

TANGENTIAL

1.00 RELATIVE
FIELD HEIGHT
( 22.43 )°

0.03

-0.03

# FIG.15F

SAGITTAL

0.03

-0.03

# FIG.15B

0.90 RELATIVE
FIELD HEIGHT
( 20.38 )°

0.03

-0.03

# FIG.15G

0.03

-0.03

# FIG.15C

0.70 RELATIVE
FIELD HEIGHT
( 16.11 )°

0.03

-0.03

# FIG.15H

0.03

-0.03

# FIG.15D

0.50 RELATIVE
FIELD HEIGHT
( 11.66 )°

0.03

-0.03

# FIG.15I

0.03

-0.03

# FIG.15E

0.00 RELATIVE
FIELD HEIGHT
( 0.000 )°

0.03

-0.03

# FIG.15J

0.03

-0.03

| | |
|---|---|
| — · — — · — · — | 656.27 NM |
| ———————— | 546.07 NM |
| — — — — — — · | 486.13 NM |

# FIG.16A

TANGENTIAL

EX3-POS2

1.00 RELATIVE
FIELD HEIGHT
( 21.93 )°

# FIG.16F

SAGITTAL

0.03

-0.03

0.03

-0.03

# FIG.16B

0.90 RELATIVE
FIELD HEIGHT
( 19.92 )°

0.03

-0.03

# FIG.16G

0.03

-0.03

# FIG.16C

0.70 RELATIVE
FIELD HEIGHT
( 15.76 )°

0.03

-0.03

# FIG.16H

0.03

-0.03

# FIG.16D

0.50 RELATIVE
FIELD HEIGHT
( 11.40 )°

0.03

-0.03

# FIG.16I

0.03

-0.03

# FIG.16E

0.00 RELATIVE
FIELD HEIGHT
( 0.000 )°

0.03

-0.03

# FIG.16J

0.03

-0.03

```
— · — · — · — · —   656.27 NM
——————————————   546.07 NM
— — — — — — — ·   486.13 NM
```

# FIG.17A

**TANGENTIAL**

EX4-POS1

1.00 RELATIVE
FIELD HEIGHT
( 22.42 )°

0.03

-0.03

# FIG.17F

**SAGITTAL**

0.03

-0.03

# FIG.17B

0.90 RELATIVE
FIELD HEIGHT
( 20.37 )°

0.03

-0.03

# FIG.17G

0.03

-0.03

# FIG.17C

0.70 RELATIVE
FIELD HEIGHT
( 16.11 )°

0.03

-0.03

# FIG.17H

0.03

-0.03

# FIG.17D

0.50 RELATIVE
FIELD HEIGHT
( 11.66 )°

0.03

-0.03

# FIG.17I

0.03

-0.03

# FIG.17E

0.00 RELATIVE
FIELD HEIGHT
( 0.000 )°

0.03

-0.03

# FIG.17J

0.03

-0.03

— · — · — · — ·   656.27 NM
————————   546.07 NM
— — — — — ·   486.13 NM

EP 3 029 504 B1

# FIG.18A

EX4-POS2

TANGENTIAL

1.00 RELATIVE
FIELD HEIGHT
( 21.86 )°

# FIG.18F

SAGITTAL

# FIG.18B

0.90 RELATIVE
FIELD HEIGHT
( 19.86 )°

# FIG.18G

# FIG.18C

0.70 RELATIVE
FIELD HEIGHT
( 15.70 )°

# FIG.18H

# FIG.18D

0.50 RELATIVE
FIELD HEIGHT
( 11.36 )°

# FIG.18I

# FIG.18E

0.00 RELATIVE
FIELD HEIGHT
( 0.000 )°

# FIG.18J

- — · — · — · — · 656.27 NM
——————— 546.07 NM
— — — — — — · 486.13 NM

38

# FIG.19A

TANGENTIAL

<u>EX5-POS1</u>
1.00 RELATIVE
FIELD HEIGHT
( 22.40 )°

# FIG.19F

SAGITTAL

0.03

-0.03

0.03

-0.03

# FIG.19B

0.90 RELATIVE
FIELD HEIGHT
( 20.35 )°

0.03

-0.03

# FIG.19G

0.03

-0.03

# FIG.19C

0.70 RELATIVE
FIELD HEIGHT
( 16.09 )°

0.03

-0.03

# FIG.19H

0.03

-0.03

# FIG.19D

0.50 RELATIVE
FIELD HEIGHT
( 11.64 )°

0.03

-0.03

# FIG.19I

0.03

-0.03

# FIG.19E

0.00 RELATIVE
FIELD HEIGHT
( 0.000 )°

0.03

-0.03

# FIG.19J

0.03

-0.03

— · — · — · — · —  656.27 NM
——————— 546.07 NM
— — — — — — · 486.13 NM

EP 3 029 504 B1

FIG.20A
FIG.20B
FIG.20C
FIG.20D
FIG.20E
FIG.20F
FIG.20G
FIG.20H
FIG.20I
FIG.20J

EX5-POS2

TANGENTIAL    SAGITTAL

1.00 RELATIVE FIELD HEIGHT ( 22.05 )°
0.90 RELATIVE FIELD HEIGHT ( 20.04 )°
0.70 RELATIVE FIELD HEIGHT ( 15.85 )°
0.50 RELATIVE FIELD HEIGHT ( 11.47 )°
0.00 RELATIVE FIELD HEIGHT ( 0.000 )°

656.27 NM
546.07 NM
486.13 NM

# FIG.21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012220654 A
- US 2013162887 A1
- US 2012162787 A
- JP 2012242472 A
- US 2012257100 A